# EUROPEAN PATENT APPLICATION

(11) **EP 4 075 867 A1**
(43) Date of publication of application: **19.10.2022**
(21) Application number: 20910957.8
(22) Date of filing: 11.11.2020
(51) Int. Cl.: H04W 36/00

(54) **APPLICATION INSTANCE DETERMINATION METHOD, DEVICE, AND SYSTEM**

(30) Priority: 31.12.2019 CN 201911413716; 06.01.2020 CN 202010011314; 13.07.2020 CN 202010670950
(71) Applicant: Huawei Technologies Co., Ltd., Shenzhen, Guangdong 518129 (CN)
(72) Inventor: FENG, Jiangping, Shenzhen, Guangdong 518129 (CN)
(74) Representative: Goddar, Heinz J.
(86) International application number: PCT/CN2020/128213
(87) International publication number: WO 2021/135663

(57) **Abstract**

This application provides a method for determining an application instance, an apparatus, and a system. The method includes: A first network element obtains location information of a terminal, determines first at least one MEC application instance based on the location information of the terminal, and sends address information of the first at least one MEC application instance to the terminal. This reduces a latency of packet transmission between an MEC application instance and the terminal, and improves quality of services.

## Description

This application claims priority to Chinese Patent Application No. 201911413716.3, filed with the China National Intellectual Property Administration on December 31, 2019 and entitled "METHOD FOR DETERMINING APPLICATION INSTANCE, APPARATUS, AND SYSTEM", Chinese Patent Application No. 202010011314.7, filed with the China National Intellectual Property Administration on January 6, 2020 and entitled "METHOD FOR DETERMINING APPLICATION INSTANCE, APPARATUS, AND SYSTEM", and Chinese Patent Application No. 202010670950.0, filed with the China National Intellectual Property Administration on July 13, 2020 and entitled "METHOD FOR DETERMINING APPLICATION INSTANCE, APPARATUS, AND SYSTEM", which are incorporated herein by reference in their entireties.

### TECHNICAL FIELD

This application relates to the field of communication technologies, and in particular, to a method for determining an application instance, an apparatus, and a system.

### BACKGROUND

Multi-access edge computing (Multi-access Edge Computing, MEC) provides a cloud computing-based capability for a mobile user at the edge of a carrier network close to the user, so that the user can deploy an application at the edge of the network by using the capability. After the cloud computing capability is deployed at the edge of the network, a telecom service that boasts high performance, a low latency, and high bandwidth can be provided, to accelerate delivery and downloading of content, services, and applications in the network, improving network experience of a consumer.

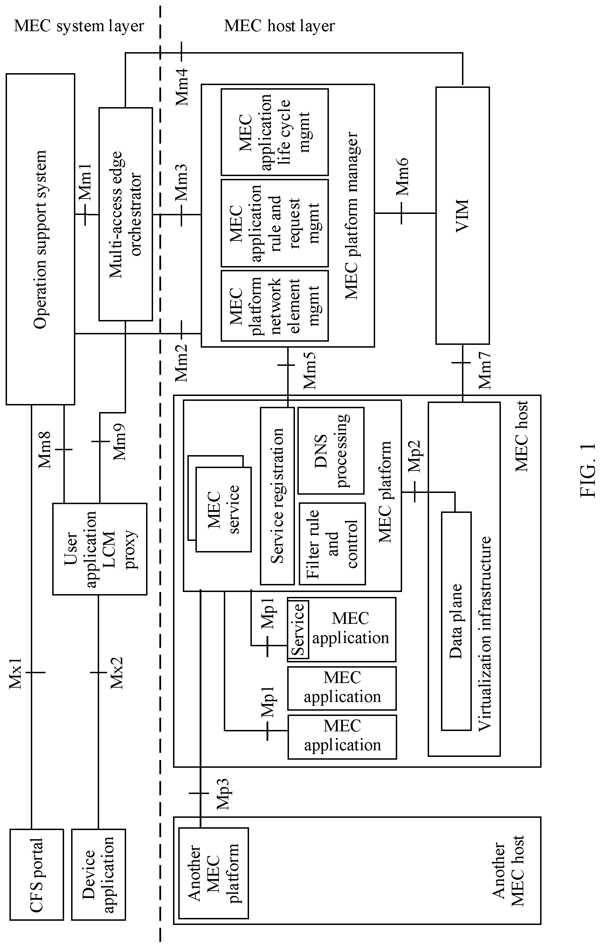

The European Telecommunications Standards Institute (European Telecommunications Standards Institute, ETSI) defines a reference architecture of MEC in its specification ETSI GS MEC 003. As shown in FIG. 1, the architecture mainly includes two parts: an MEC host (MEC Host) and an MEC management system. The MEC host includes an MEC platform (MEC Platform), virtualization infrastructure (Virtualization infrastructure), and an MEC application (MEC app). The virtualization infrastructure provides virtualized computing, storage, and network resources for the MEC application. The MEC application is deployed on the MEC host in a form of a virtual machine or a container. The MEC platform mainly includes service registration and discovery functions, and also includes some common services, such as a domain name system (domain name system, DNS) server or a DNS proxy service. The MEC management system includes a multi-access edge orchestrator (Multi-access edge orchestrator), an MEC platform manager (MEC platform manager), a virtualization infrastructure manager (Virtualization infrastructure manager, VIM), and the like. The multi-access edge orchestrator maintains an overall view of an MEC system including all mobile edge hosts, available resources, and available MEC services, and triggers application instantiation and termination. The MEC platform manager is configured to manage the MEC platform, a life cycle of a mobile MEC application, and a flow rule and a DNS rule of the application. The VIM manages virtualization resources required by the MEC application. A user application life cycle management proxy (User app LCM proxy) allows a device application (Device app) to request the MEC system to instantiate and terminate the MEC application.

How to provide an optimal MEC application instance for a terminal is a problem to be resolved.

### SUMMARY

Embodiments of this application provide a method for determining an application instance, an apparatus, and a system, to determine an optimal MEC application instance for a terminal.

According to a first aspect, a method for determining an application instance is provided, including: A first network element obtains location information of a terminal. The first network element determines first at least one MEC application instance based on the location information of the terminal. The first network element sends address information of the first at least one MEC application instance to the terminal.

Based on the foregoing solution, when the terminal requests an MEC application instance, the first network element determines, based on a maintained correspondence between location information and an MEC application instance and the obtained location information of the terminal, an MEC application instance that has an optimal distance from the terminal. This reduces a latency of packet transmission between the MEC application instance and the terminal, and improves quality of services.

In a possible implementation method, the first network element receives a first message sent by the terminal. The first message includes the location information of the terminal.

In a possible implementation method, the first network element receives a second message sent by a core network control plane function network element. The second message includes the location information of the terminal.

In a possible implementation method, the first network element stores address information of second at least one MEC application instance and location information of the second at least one MEC application instance. That the first network element determines first at least one MEC application instance based on the location information of the terminal includes: The first network element determines the first at least one MEC application instance from the second at least one MEC application instance based on the location information of the terminal and the location information of the second at least one MEC application instance.

According to a second aspect, a method for determining an application instance is provided, including: A control plane function network element sends first notification information to a first network element. The first notification information is used to notify the first network element that a user plane path of a terminal changes. The first network element obtains location information of the terminal. The first network element determines first at least one MEC application instance based on the location information of the terminal. The first network element sends address information of the first at least one MEC application instance to the terminal.

Based on the foregoing solution, when a UPF network element serving the terminal changes, a current MEC application instance may not be optimal. The first network element determines, based on the location information (a destination user plane location) of the terminal, an optimal application instance after the terminal switches to a new UPF network element. This reduces a latency of packet transmission between an MEC application instance and the terminal, and improves quality of services.

In a possible implementation method, that the first network element obtains location information of the terminal includes: The first network element receives the first notification information. The first notification information includes the location information of the terminal, and the location information of the terminal is location information of a target user plane function (UPF) network element.

In a possible implementation method, the method further includes: The first network element receives an MEC application instance change subscription request message sent by the terminal.

According to a third aspect, a method for determining an application instance is provided, including: A first network element obtains information about first at least one EDN from a session management network element or a source EES. The first at least one EDN is determined based on location information of a terminal. The first network element determines first at least one MEC application instance in the first at least one EDN. The first network element sends address information of the first at least one MEC application instance to the terminal or the source EES. According to the method provided in the third aspect, when the terminal requests an MEC application instance, the first network element requests the information about the first at least one EDN from an SMF network element, to determine the first at least one MEC application instance. This reduces a latency of packet transmission between the MEC application instance and the terminal, and improves quality of services.

In a possible implementation method, that a first network element obtains information about first at least one EDN from a session management network element or a source EES includes: The first network element sends a third message to the session management network element or the source EES. The third message is used to request at least one EDN that includes the MEC application instance requested by the terminal. The first network element receives the information about the first at least one EDN from the session management network element or the source EES.

In a possible implementation method, the third message includes information about a candidate EDN. The candidate EDN is determined by the first network element based on the location information of the terminal and information about an EDN stored in the first network element.

In a possible implementation method, the third message includes the location information of the terminal.

In a possible implementation method, the information about the first at least one EDN includes a data network application identifier (DNAI) of the first at least one EDN.

In a possible implementation method, the DNAI of the first at least one EDN includes a DNAI of an EES in the first at least one EDN and/or a DNAI of an MEC application instance in the first at least one EDN.

In a possible implementation method, the method further includes: The first network element sends, to the terminal or the source EES, address information of an EES associated with the first at least one MEC application instance. The EES associated with the first at least one MEC application instance is included in the first at least one EDN.

In a possible implementation method, the information about the first at least one EDN is used to indicate communication performance of a communication path between the terminal and the first at least one EDN.

In a possible implementation method, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

In a possible implementation method, the method further includes: The first network element sends priority information of the first at least one MEC application instance to the terminal or the source EES.

According to a fourth aspect, a method for determining an EES is provided, including: A first network element obtains information about first at least one EDN from a session management network element or a source EES. The first at least one EDN is determined based on location information of a terminal. The first network element determines first at least one EES in the first at least one EDN. The first network element sends address information of the first at least one EES to the terminal or the source EES. According to the method provided in the fourth aspect, when the terminal requests an EES, the first network element requests the information about the first at least one EDN from an SMF network element, to determine the first at least one EES. This reduces a latency of packet transmission between the terminal and an MEC application instance managed by the EES, and improves quality of services.

In a possible implementation method, that a first network element obtains information about first at least one EDN from a session management network element or a source EES includes: The first network element sends a third message to the session management network element or the source EES. The third message is used to request at least one EDN that includes the EES requested by the terminal. The first network element receives the information about the first at least one EDN from the session management network element or the source EES.

In a possible implementation method, the third message includes information about a candidate EDN. The candidate EDN is determined by the first network element based on the location information of the terminal and information about an EDN stored in the first network element.

In a possible implementation method, the third message includes the location information of the terminal.

In a possible implementation method, the information about the first at least one EDN includes a data network application identifier (DNAI) of the first at least one EDN.

In a possible implementation method, the DNAI of the first at least one EDN includes a DNAI of an EES in the first at least one EDN and/or a DNAI of a multi-access edge computing (MEC) application instance in the first at least one EDN.

In a possible implementation method, the information about the first at least one EDN is used to indicate communication performance of a communication path between the terminal and the first at least one EDN.

In a possible implementation method, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

In a possible implementation method, the method further includes: The first network element sends priority information of the first at least one EES to the terminal or the source EES.

According to a fifth aspect, a communication method is provided, including: A session management network element receives a third message from a first network element. The third message is used to request at least one EDN that includes an MEC application instance requested by a terminal or an EES requested by the terminal. The session management network element sends information about first at least one EDN to the first network element based on the third message. When the at least one EDN includes the MEC application instance requested by the terminal, the first at least one EDN includes an EDN that includes the MEC application instance requested by the terminal. When the at least one EDN includes the EES requested by the terminal, the first at least one EDN includes an EDN that includes the EES requested by the terminal. According to the communication method provided in the fifth aspect, when the terminal requests the MEC application instance, the first network element requests the information about the first at least one EDN from an SMF network element, to determine first at least one MEC application instance. This reduces a latency of packet transmission between the MEC application instance and the terminal, and improves quality of services. When the terminal requests the EES, the first network element requests the information about the first at least one EDN from the SMF network element, to determine the first at least one EES. This reduces a latency of packet transmission between the terminal and an MEC application instance managed by the EES, and improves quality of services.

In a possible implementation method, the first at least one EDN is determined based on location information of the terminal and information about second at least one EDN obtained by the session management network element.

In a possible implementation method, the first at least one EDN is determined based on the location information of the terminal and information about a candidate EDN, and the information about the candidate EDN is carried in the third message.

In a possible implementation method, the location information of the terminal is carried in the third message.

In a possible implementation method, the information about the first at least one EDN includes a data network application identifier (DNAI) of the first at least one EDN.

In a possible implementation method, the DNAI of the first at least one EDN includes a DNAI of the EES in the first at least one EDN and/or a DNAI of the MEC application instance in the first at least one EDN.

In a possible implementation method, the information about the first at least one EDN is used to indicate communication performance of a communication path between the terminal and the first at least one EDN.

In a possible implementation method, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

According to a sixth aspect, a signal sending method is provided, including: A terminal sends a first message. The first message includes location information of the terminal. Alternatively, the terminal sends an MEC application instance change subscription request.

According to a seventh aspect, a method for determining an EES is provided, including: A first network element obtains information about first at least one EDN from a second network element. The first at least one EDN is determined based on at least one of location information of a terminal or service information of the terminal, and the second network element is a first session management network element, an NEF network element, or a source EES. The first network element determines first at least one EES based on the information about the first at least one EDN. The first network element sends address information of the first at least one EES to the terminal or the source EES.

In a possible implementation method, that a first network element obtains information about first at least one EDN from a second network element includes: The first network element sends a third message to the second network element. The third message includes at least one of information used to determine a location of the terminal or the service information of the terminal. The first network element receives the information about the first at least one EDN from the second network element. The first at least one EDN matches at least one of the location information of the terminal or the service information of the terminal.

In a possible implementation method, the information about the first at least one EDN includes at least one DNAI of the first at least one EDN.

In a possible implementation method, the DNAI of the first at least one EDN includes a DNAI of an EES in the first at least one EDN and/or a DNAI of an MEC application instance in the first at least one EDN.

In a possible implementation method, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

In a possible implementation method, the method further includes: The first network element sends priority information of the first at least one EES to the terminal or the source EES.

According to an eighth aspect, a communication method is provided, including: A second network element receives a third message from a first network element. The third message includes at least one of information used to determine a location of a terminal or service information of the terminal, and the second network element is a first session management network element, an NEF network element, or a source EES. The second network element sends information about first at least one EDN to the first network element based on the third message. The first at least one EDN matches at least one of location information of the terminal or the service information of the terminal.

In a possible implementation method, that the second network element sends information about first at least one EDN to the first network element based on the third message includes: The second network element determines a second session management network element based on the location information of the terminal. The second network element sends a request message to the second session management network element. The request message includes at least one of location information or service information, the location information includes the location information of the terminal, and the service information includes the service information of the terminal. The second network element receives the information about the first at least one EDN from the second session management network element. The second network element sends the information about the first at least one EDN to the first network element.

In a possible implementation method, the second network element is the NEF network element, and that the second network element sends information about first at least one EDN to the first network element based on the third message includes: The second network element determines the information about the first at least one EDN based on the location information of the terminal and a first correspondence. The first correspondence includes a correspondence between location area information and information about an EDN. Alternatively, the second network element determines the information about the first at least one EDN based on the service information of the terminal and a second correspondence. The second correspondence includes a correspondence between service information and information about an EDN. Alternatively, the second network element determines the information about the first at least one EDN based on the location information of the terminal, the service information of the terminal, and a third correspondence. The third correspondence includes a correspondence among location area information, information about an EDN, and service information. The second network element sends the information about the first at least one EDN to the first network element.

In a possible implementation method, the information about the first at least one EDN includes at least one DNAI of the first at least one EDN.

In a possible implementation method, the DNAI of the first at least one EDN includes a DNAI of an EES in the first at least one EDN and/or a DNAI of a multi-access edge computing (MEC) application instance in the first at least one EDN.

In a possible implementation method, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

According to a ninth aspect, a communication method is provided, including: A second session management network element receives a request message from a second network element. The request message includes at least one of location information and service information, the location information includes location information of a terminal, the service information includes service information of the terminal, and the second network element is a first session management network element, an NEF network element, or a source EES. When the request message includes the location information, the second session management network element determines information about first at least one EDN based on the location information and a first correspondence. The first correspondence includes a correspondence between location area information and information about an EDN. Alternatively, when the request message includes the service information, the second session management network element determines information about first at least one EDN based on the service information and a second correspondence. The second correspondence includes a correspondence between the service information and information about an EDN. Alternatively, when the request message includes the location information and the service information, the second session management network element determines information about first at least one EDN based on the location information, the service information, and a third correspondence. The third correspondence includes a correspondence among location area information, information about an EDN, and the service information. The second session management network element sends the information about the first at least one EDN to the second network element.

According to a tenth aspect, a communication apparatus is provided, including a function unit configured to perform any method provided in any one of the first aspect to the ninth aspect. An action performed by the function unit is implemented by hardware or implemented by hardware executing corresponding software.

According to an eleventh aspect, a communication apparatus is provided, including a processor and a memory. The memory is configured to store computer-executable instructions. When the apparatus runs, the processor executes the computer-executable instructions stored in the memory, so that the apparatus performs any method provided in any one of the first aspect to the ninth aspect.

According to a twelfth aspect, a terminal apparatus is provided. The terminal apparatus is configured to send a first message, where the first message includes location information; or the terminal apparatus is configured to send an MEC application instance change subscription request.

According to a thirteenth aspect, a communication apparatus is provided, including units or means (means) configured to perform the steps in any method provided in any one of the first aspect to the ninth aspect.

According to a fourteenth aspect, a communication apparatus is provided, including a processor and an interface circuit. The processor is configured to: communicate with another apparatus through the interface circuit, and perform any method provided in any one of the first aspect to the ninth aspect. There are one or more processors.

According to a fifteenth aspect, a communication apparatus is provided, including a processor, configured to: connect to a memory, and invoke a program stored in the memory, to perform any method provided in any one of the first aspect to the ninth aspect. The memory may be located inside or outside the apparatus. In addition, there are one or more processors.

According to a sixteenth aspect, a computer-readable storage medium is provided. The computer-readable storage medium stores instructions. When the instructions are run on a computer, a processor is enabled to perform any method provided in any one of the first aspect to the ninth aspect.

According to a seventeenth aspect, a computer program product including instructions is provided. When the computer program product runs on a computer, the computer is enabled to perform any method provided in any one of the first aspect to the ninth aspect.

According to an eighteenth aspect, a chip system is provided, including a processor, configured to perform any method provided in any one of the first aspect to the ninth aspect.

According to a nineteenth aspect, a communication system is provided, including a control plane function network element and a first network element. The control plane function network element is configured to send first notification information to the first network element. The first notification information is used to notify the first network element that a user plane path of a terminal changes. The first network element is configured to: obtain location information of the terminal, and determine first at least one MEC application instance based on the location information of the terminal. The first network element is further configured to send address information of the first at least one MEC application instance to the terminal.

According to a twentieth aspect, a communication system is provided, including any one or more network elements in the first aspect to the ninth aspect.

### BRIEF DESCRIPTION OF DRAWINGS

FIG. 1 is a schematic diagram of an architecture of an MEC system;
FIG. 2 is a schematic diagram of a 5G network architecture based on a service-oriented architecture;
FIG. 3 is a schematic diagram of an architecture of an MEC system;
FIG. 3A is a schematic diagram of an architecture of another MEC system;
FIG. 3B is a schematic diagram of an architecture of still another MEC system;
FIG. 3C is a schematic diagram of an architecture of yet another MEC system;
FIG. 4 is a schematic diagram of a relationship between a location of a terminal and a location of an MEC application instance;
FIG. 5 is a schematic flowchart of a method for determining an application instance according to an embodiment of this application;
FIG. 6 is a schematic flowchart of another method for determining an application instance according to an embodiment of this application;
FIG. 6A is a schematic flowchart of still another method for determining an application instance according to an embodiment of this application;
FIG. 6B is a schematic flowchart of a method for determining an EES according to an embodiment of this application;
FIG. 6C is a schematic diagram of locations of an EES and an EDN CS according to an embodiment of this application;
FIG. 6D is a schematic flowchart of a method for determining an EES according to an embodiment of this application;
FIG. 6E is a schematic flowchart of a method for obtaining information about an EDN according to an embodiment of this application;
FIG. 6F is a schematic flowchart of another method for obtaining information about an EDN according to an embodiment of this application;
FIG. 6G is a schematic diagram of a correspondence between a DNAI and an EDN according to an embodiment of this application;
FIG. 6H-1 and FIG. 6H-2 are a flowchart of a method for determining an EES that provides a service for a terminal according to an embodiment of this application;
FIG. 61-1 and FIG. 6I-2 are a flowchart of a method for determining an MEC application instance that provides a service for a terminal according to an embodiment of this application;

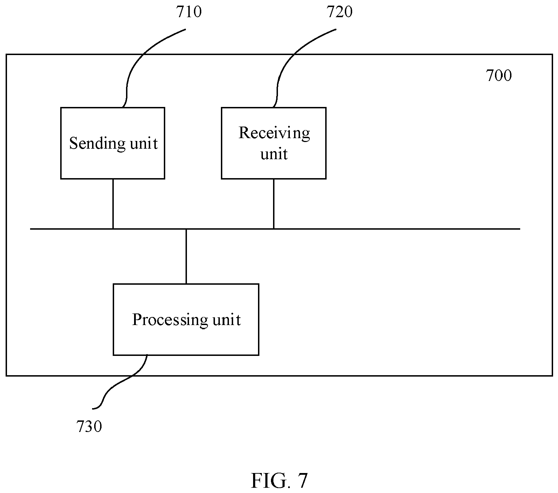

FIG. 7 is a schematic diagram of a communication apparatus according to an embodiment of this application;

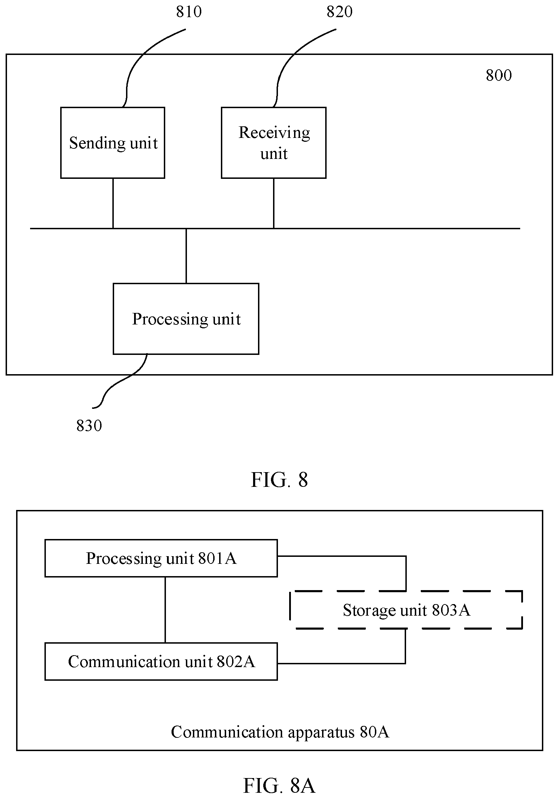

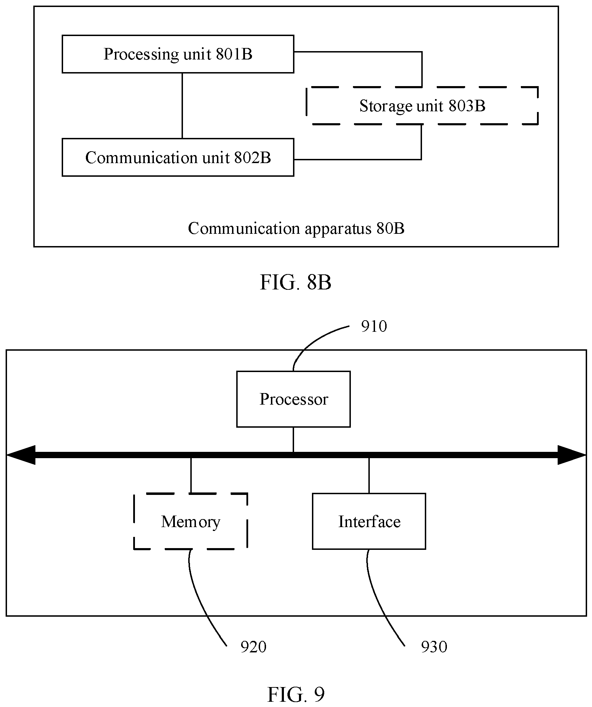

FIG. 8 is a schematic diagram of another communication apparatus according to an embodiment of this application;
FIG. 8A is a schematic diagram of still another communication apparatus according to an embodiment of this application;
FIG. 8B is a schematic diagram of yet another communication apparatus according to an embodiment of this application; and
FIG. 9 is a schematic diagram of still yet another communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings. A specific operation method in a method embodiment may also be applied to an apparatus embodiment or a system embodiment. In descriptions of embodiments of this application, "a plurality of' means two or more than two unless otherwise specified.

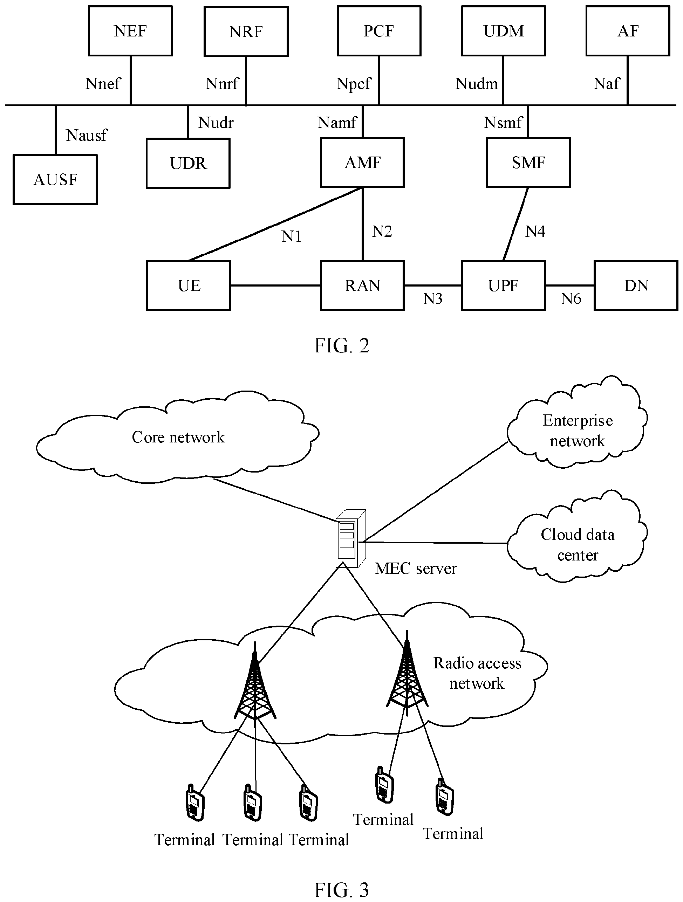

FIG. 2 is a schematic diagram of a 5th generation (5th generation, 5G) network architecture based on a service-oriented architecture. The 5G network architecture shown in FIG. 2 may include three parts: a terminal (namely, UE in FIG. 2), a data network (data network, DN), and a carrier network. The following briefly describes functions of some network elements.

The carrier network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a radio access network (radio access network, RAN) network element, a user plane function (user plane function, UPF) network element, and the like. In the foregoing carrier network, parts other than the radio access network may be referred to as core network parts.

The terminal is a device having a wireless transceiver function, may be deployed on land, and includes an indoor device, an outdoor device, a hand-held device, or a vehicle-mounted device. The terminal may also be deployed on water (for example, on a ship), and may also be deployed in air (for example, in an aircraft, a balloon, or a satellite). Alternatively, the terminal may be referred to as user equipment (user equipment, UE), a terminal device (terminal device), an access terminal, a subscriber unit, a subscriber station, a mobile station, a remote station, a remote terminal, a mobile device, a user terminal, a wireless communication device, a user agent, or a user apparatus. The terminal may be a mobile phone (mobile phone), a tablet (pad), a computer having the wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

The terminal may establish a connection to the carrier network through an interface (for example, N1) provided by the carrier network, and use services such as a data service and/or a voice service provided by the carrier network. The terminal may further access the DN through the carrier network, and use a carrier service deployed on the DN and/or a service provided by a third party. The third party may be a service provider other than the carrier network and the terminal, and may provide another service such as a data service and/or a voice service for the terminal device. A specific representation form of the third party may be specifically determined based on an actual application scenario, and is not limited herein.

The RAN is a sub-network of the carrier network, and is an implementation system between a service node in the carrier network and the terminal. To access the carrier network, the terminal first passes through the RAN, and may be connected to the service node in the carrier network through the RAN. A RAN device is a device that provides a wireless communication function for the terminal, and the RAN device is also referred to as an access network device. The RAN device includes but is not limited to: a next generation NodeB (gNodeB, gNB), an evolved NodeB (evolved NodeB, eNB), a radio network controller (radio network controller, RNC), a NodeB (NodeB, NB), a base station controller (base station controller, B SC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a mobile switching center, and the like in 5G.

The AMF network element is responsible for mobility management of a user, including mobility status management, temporary user identity allocation, user authentication and authorization, and the like.

The SMF network element has functions such as session management, execution of a control policy delivered by a PCF network element, selection of a UPF network element, terminal internet protocol (internet protocol, IP) address allocation, bearer setup, modification, and release, and quality of service (Quality of Service, QoS) control.

The UPF network element supports functions such as interconnection between a protocol data unit (protocol data unit, PDU) session and the data network, packet routing and forwarding, and data packet detection.

The UDM network element is mainly responsible for functions such as subscription data management and user access authorization.

The UDR stores and retrieves subscription data, policy data, and common architecture data, so that the UDM, PCF network element, and NEF network element can obtain related data. The UDR can provide different data access authentication mechanisms for different types of data, such as the subscription data and the policy data, to ensure data access security. The UDR needs to return a failure response with an appropriate cause value for an invalid service operation or data access request.

The NEF network element mainly supports a network capability exposure function and exposes network capabilities and services to external systems. A 3rd generation partnership project (3rd generation partnership project, 3GPP) network function (network function, NF) network element publishes a function and an event to another NF network element through the NEF network element. A capability and an event exposed by the NF network element can be securely exposed to a third-party application. The NEF network element uses a standardized interface (Nudr) of a unified data repository (UDR) to store/retrieve structured data, and translates exchange information of an AF network element and exchange information of an internal network function.

The AF network element is configured to provide an application layer service for the terminal. When providing the service for the terminal, the AF network element has a requirement on a QoS policy and a charging policy, and needs to notify a network. In addition, the AF network element also requires application-related information fed back by the core network.

The PCF network element is mainly responsible for policy control functions such as session-level or service flow-level charging, QoS bandwidth guarantee and mobility management, and terminal policy decision. In this architecture, PCF network elements connected to the AMF network element and the SMF network element are separately an AM PCF network element (PCF network element for Access and Mobility Control) and an SM PCF network element (PCF network element for Session Management). In an actual deployment scenario, the PCF network elements may not be a same PCF entity.

The NRF network element may be configured to provide a network element discovery function and provide network element information corresponding to a network element type based on a request from another network element. The NRF network element further provides a network element management service, for example, registration, update, and deregistration of a network element and subscription and push of a network element status.

The AUSF network element is mainly responsible for authenticating the user, to determine whether to allow the user or the device to access the network.

The DN is a network outside the carrier network. The carrier network may access a plurality of DNs. A plurality of services may be deployed on the DN, and the DN may provide services such as a data service and/or a voice service for the terminal. For example, the DN is a private network of a smart factory, a sensor installed in a workshop of the smart factory may be the terminal, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be the terminal, and the mobile phone or the computer of the employee may access information, data resources, and the like on the internal office network of the company.

In FIG. 2, Nausf, Nnef, Npcf, Nudm, Naf, Namf, Nsmf, N1, N2, N3, N4, and N6 are interface serial numbers. For meanings of these interface serial numbers, refer to definitions in 3GPP specifications. No limitation is imposed herein.

It may be understood that the network elements or the functions may be network elements in a hardware device, software functions running on dedicated hardware, or virtualized functions instantiated on a platform (for example, a cloud platform). Optionally, the foregoing network elements or functions may be implemented by one device, or may be jointly implemented by a plurality of devices, or may be one function module in one device. This is not specifically limited in embodiments of this application.

A mobility management network element, a session management network element, a policy control network element, an application function network element, an access network device, a network exposure function network element, and a user plane network element in embodiments of this application may be respectively an AMF network element, an SMF network element, a PCF network element, an AF network element, a RAN, an NEF network element, and a UPF network element in FIG. 2, or may be network elements that have functions of the AMF network element, the SMF network element, the PCF network element, the AF network element, the RAN, the NEF network element, and the UPF network element in future communication such as a 6th generation (6th generation, 6G) network. This is not limited in embodiments of this application. For ease of description, that the mobility management network element, the session management network element, the policy control network element, the application function network element, the access network device, the network exposure function network element, and the user plane network element are respectively the AMF network element, the SMF network element, the PCF network element, the AF network element, the RAN, the NEF network element, and the UPF network element is used an example for description in embodiments of this application.

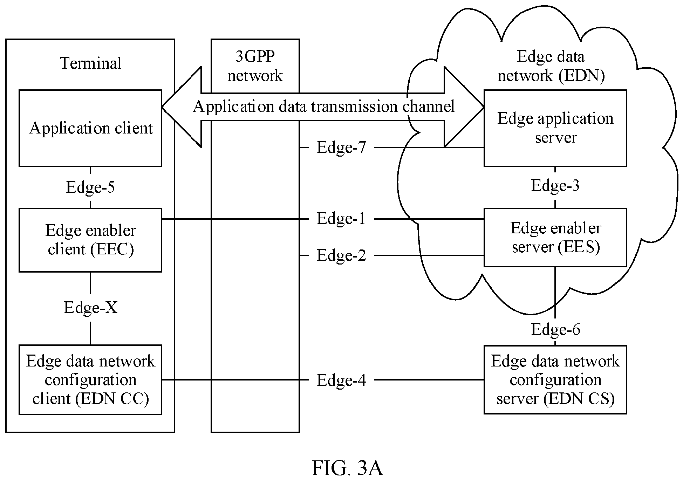

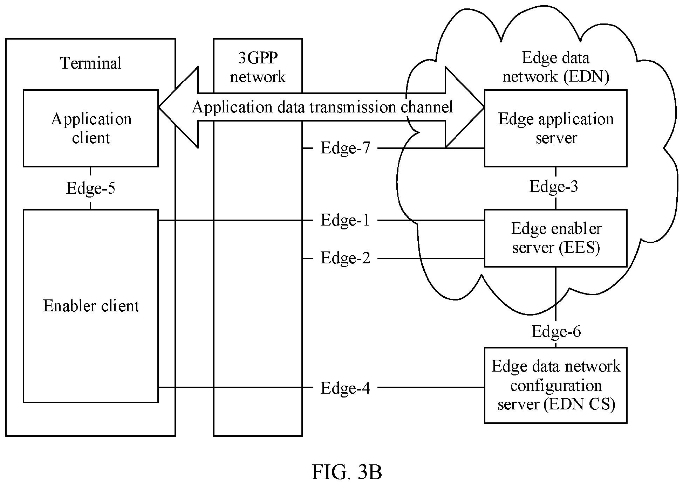

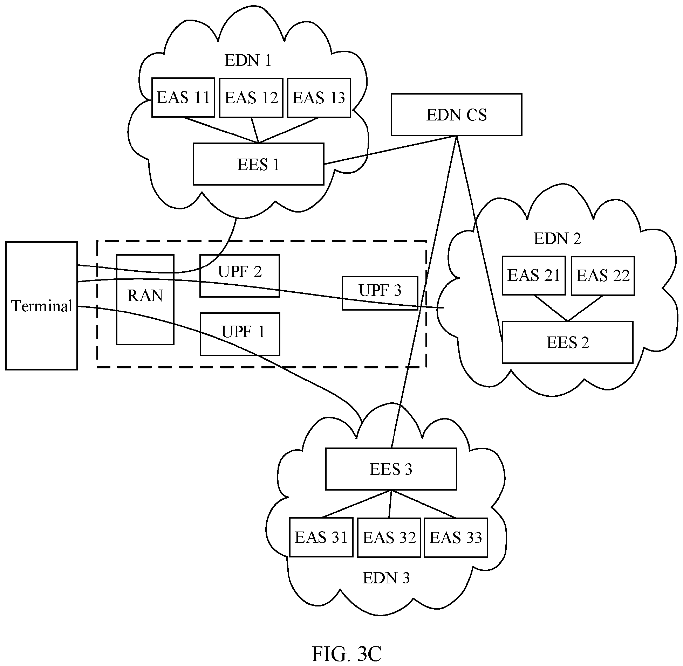

FIG. 3 is a schematic diagram of an architecture of an MEC system according to an embodiment of this application. An MEC server is deployed between a radio access network and a core network. The MEC server is a server on which an MEC platform is deployed and that is managed by the MEC platform. In addition, the MEC server may be connected to a cloud data center and another network, for example, an enterprise network. In this way, the MEC server provides a service and a cloud computing function for a terminal nearby by using the radio access network. In this embodiment of this application, the MEC server may be established by a carrier, an enterprise, a virtual network operator, or a service provider. Alternatively, the UPF network element in FIG. 2 may be integrated into the MEC server.

The method provided in embodiments of this application may be applied to the following two MEC architectures.

Manner 1: A reference architecture of MEC defined by ETSI in the ETSI GS MEC 003 specification. For details, refer to FIG. 1. For a specific description of FIG. 1, refer to the background. Details are not described again.

Manner 2: A reference architecture of MEC defined by the 3GPP SA6 working group, as shown in FIG. 3A or FIG. 3B. A difference between FIG. 3B and FIG. 3A lies only in that, in FIG. 3B, functions of an edge enabler client (edge enabler client, EEC) and an edge data network configuration client (edge data network configuration client, EDN CC) are integrated to form an enabler client (denoted as an enabler client in FIG. 3B) that has functions of the EDN CC and the EEC. The following briefly describes function modules and interfaces between the function modules in FIG. 3A and FIG. 3B.

Edge data network (edge data network, EDN): The EDN is configured to provide an edge computing service for a terminal, and may include functions such as computing, storage, network, communication, and routing. The EDN may generally include an edge computing management platform (for example, an edge enabler server (edge enabler server, EES) below) and an edge application instance (for example, an edge application server (edge application server, EAS)). In an understanding, the EDN may be a local data network (local data network, that is, a local DN), and represents an access point of a data network that is physically closest to a user attachment point (that is, an access network device (for example, a base station) accessed by the terminal). One data network may have a plurality of local data networks. The local data network may be identified by using a data network name (data network name, DNN) and/or a data network application identifier (data network application identifier, DNAI). The DNAI may identify a location of the local data network. In another understanding, the EDN is a peer-to-peer concept of a central cloud, that is, the EDN may be understood as a local data center, and may support a plurality of local data networks. The data center may also be identified by using a DNAI.

EAS: The EAS is configured to provide an application service having an edge computing feature for an application client, and is specifically an instance (instance) of a server application (for example, social media software, augmented reality (augmented reality, AR), or virtual reality (virtual reality, VR)) that is deployed and runs on the EDN. One MEC application may have one or more EASs deployed in one or more EDNs. EASs deployed and running in different EDNs may be considered as different EASs. The EASs may share a domain name, and may use a same IP address or different IP addresses. The EAS may also be referred to as an edge application, an application instance, an edge application instance, an MEC application, an MEC application instance, an EAS function, or the like.

Application client: The application client is used by an application user (user) to obtain an application service from an application server. The application client is a client program of the MEC application on a terminal side. The application client may be connected to an application server on a cloud to obtain an application service, or may be connected to an EAS deployed and running in one or more EDNs to obtain an application service.

EES: The EES is configured to provide some edge computing enabling services for the EAS and the EEC, so as to better support deployment of the MEC application at an edge. The EES may support EAS registration, terminal authentication and authorization, a DNS function that provides IP address information of the application server for the terminal, and the like. The EDN includes the EES. Generally, the EAS is registered with an EES, or information about the EAS is configured on an EES by using a management system. The EES is referred to as an EES associated with the EAS. The EES controls (or manages) the EAS that is registered with (or configured on) the EES.

EEC: The EEC is a peer entity of the EES on the terminal side. The EEC is configured to: register information about the EEC and information about the application client with the EES, perform security authentication and authorization, obtain an IP address of the EAS from the EES, and provide an edge computing enabling capability for the application client, for example, an EAS discovery service returns the IP address of the EAS to the application client. The EEC can also invoke a service interface provided by the EDN CC.

Edge data network configuration server (edge data network configuration server, EDN CS): The EDN CS is configured to configure information about the EDN for the terminal, for example, provide information about the EES in the EDN for the terminal. Further, the EDN CS may have the DNS function, and have a domain name of the EAS, an IP address of the EAS, and information about the EES with which the EAS registers. The EDN CS may further directly provide the information about the EAS for the terminal, and interact with a DNS server of the MEC application to obtain information about the application server. The EDN CS may accept an EES query or an EAS query of the EDN CC and provide a corresponding query result. The EDN CS may accept EES registration to obtain the domain name of the EAS, the IP address of the EAS, and the information about the EES with which the EAS registers. The information may also be obtained through configuration.

EDN CC: The EDN CC is a peer entity of the EDN CS on the terminal side. The EDN CC may obtain the information about the EES from the EDN CS, and may further obtain the information about the EAS from the EDN CS. The EDN CC may be further configured to provide an edge computing enabling service interface for the EEC or the application client.

The application user signs a service agreement with a provider of the MEC application, to provide a service for the application user. The application user logs in to the application client on the terminal, and performs communication by using a connection between the application client and the EAS. An enabler client (for example, the EEC or the EDN CC) is a middleware layer, and is generally located in an operating system, or is located in middleware (middleware) between the application client and the operating system. The application client may obtain an edge enabling service from the enabler client through an application programming interface (application programming interface, API).

Edge-1 (EDGE-1) interface: The edge-1 interface is an interface between the EEC and the EES, and can implement EEC registration, security authentication, EAS discovery, and application context removal.

Edge-2 (EDGE-2) interface: The edge-2 interface is an interface between the EES and the 3GPP network, is used to interact with a 3GPP core network element, and may be connected to network elements such as a network exposure function (network exposure function, NEF) network element and a policy control function (policy control function, PCF) network element.

Edge-3 (EDGE-3) interface: The edge-3 interface is an interface between the EAS and the EES, and is mainly used by the EAS to invoke a service such as event subscription and notification provided by the EES, and by the EAS to register with the EES.

Edge-4 (EDGE-4) interface: The edge-4 interface is an interface between the EDN CS and the EDN CC, and is mainly used by the EDN CS to provide the information about the EES, EAS discovery, security authorization, and the like for the EDN CC.

Edge-5 (EDGE-5) interface: The edge-5 interface is an interface between the application client and the EEC, and is used by the application client to invoke a service provided by the EEC, such as EAS discovery, event subscription and notification, and context removal.

Edge-6 (EDGE-6) interface: The edge-6 interface is an interface between the EES and the EDN CS, and is mainly used by the EES to register the information about the EES with the EDN CS, further including the information about the EAS registered with the EES.

Edge-7 (EDGE-7) interface: The edge-7 interface is an interface between the EAS and the 3GPP network, is used to interact with the 3GPP core network element, and may be connected to network elements such as the NEF network element and the PCF network element.

Edge-X (EDGE-X) interface: The edge-X interface is an interface between the EEC and the EDN CC, and may be used by the EDN CC to provide the information (such as identifier and address information) about the EES for the EEC.

It should be noted that the function modules in FIG. 3A and FIG. 3B and the interfaces between the function modules may also have other names. This is not limited in this application.

Refer to FIG. 3C. In an actual application scenario, the terminal may communicate with one or more EDNs by using a mobile communication network connection. One or more EESs are deployed in one EDN, and one EES may manage one or more EASs. For example, in FIG. 3C, an EES 1 deployed in an EDN 1 may manage an EAS 11, an EAS 12, and an EAS 13, an EES 2 deployed in an EDN 2 may manage an EAS 21 and an EAS 22, and an EES 3 deployed in an EDN 3 may manage an EAS 31, an EAS 32, and an EAS 33. The EES may store information about each EAS managed by the EES, including an identifier of the EAS, such as a fully qualified domain name (fully qualified domain name, FQDN), and address information of the EAS, such as a URL or an IP address.

EESs deployed in a plurality of EDNs may be connected to a same EDN CS. The EDN CS may store address information of each EES connected to the EDN CS and information about an EAS managed by each EES, for example, an identifier of the managed EAS, and further includes address information of the managed EAS. For example, in FIG. 3C, the EDN CS may store address information of the EES 1, the EES 2, and the EES 3, and further store identifiers and address information of EASs managed by the EES 1, the EES 2, and the EES 3.

EASs of a same MEC application may be deployed in different EDNs. For example, in FIG. 3C, EASs of an MEC application 1 may be the EAS 11, the EAS 21, and the EAS 31, EASs of an MEC application 2 may be the EAS 12, the EAS 22, and the EAS 32, and EASs of an MEC application 3 may be the EAS 13 and the EAS 33. Whether a plurality of EASs are different EASs of a same MEC application may be determined by using the EASs.

In an understanding, it may be considered that an EAS registered with the EES is a capability of the EES. For example, if an EAS of the MEC application 1 is registered with the EES, it may be considered that the capability of the EES includes supporting the MEC application 1. Generally, the EAS is registered with an EES that is located in a same EDN as the EAS. Therefore, it may be understood that an optimal EDN (physically closest, with a shortest network connection path, or with an optimal network connection path) to a terminal may provide an EES and an EAS that are closest to the terminal.

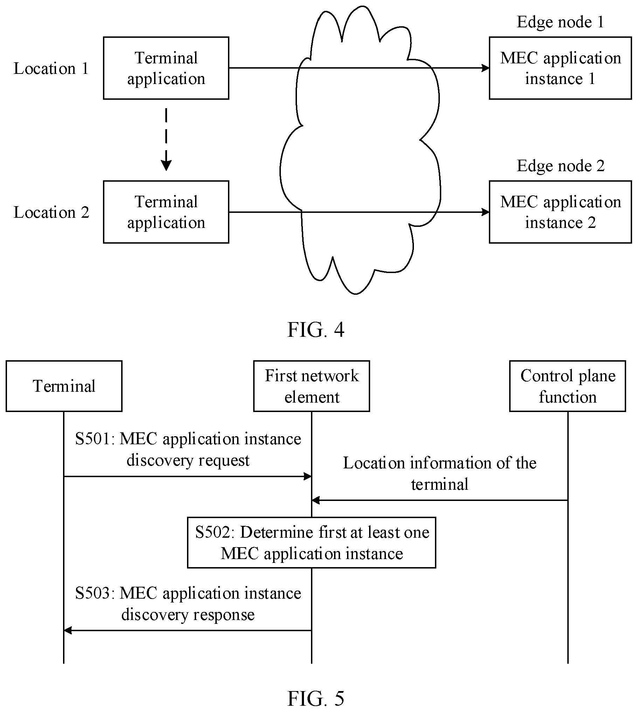

In an embodiment of this application, for ease of description, the MEC application instance in the architecture shown in FIG. 1 and the EAS in FIG. 3A to FIG. 3C are collectively referred to as an MEC application instance, and the MEC application instance (application instance) is a copy of a same MEC application. The MEC application instance is deployed on an edge node (for example, EDN). A plurality of MEC application instances can be deployed on a same edge node to implement load balancing. For an MEC application installed on the terminal, an MEC application instance that is of an edge node and that is corresponding to the MEC application provides a service for the MEC application at a specific moment. Generally, a shorter distance between a location of the edge node on which the MEC application instance is deployed and a location of the terminal indicates a shorter latency of packet transmission between the MEC application instance and the terminal, and higher quality of service. As shown in FIG. 4, when the terminal is at a location 1, an MEC application instance 1 on an edge node 1 may be considered as an optimal MEC application instance. When the terminal moves to a location 2, an MEC application instance 2 on the edge node 2 may be considered as the optimal MEC application instance. Currently, there is no method for providing the optimal MEC application instance for the MEC application of the terminal.

Based on the network architecture shown in FIG. 2 and the MEC architectures shown in FIG. 1, FIG. 3, FIG. 3A, FIG. 3B, and FIG. 3C, FIG. 5 is a schematic diagram of a communication method (which may also be referred to as a method for determining an MEC application instance) according to an embodiment of this application. In the embodiment shown in FIG. 5, a process of discovering the MEC application instance is used as an example, and includes the following steps.

S501: A terminal sends a first message to a first network element, where the first message may be an MEC application instance discovery request message. Correspondingly, the first network element receives the first message from the terminal.

In the MEC architecture shown in FIG. 1, the first network element may be an MEC system management plane function network element, and step S501 may be specifically performed by a terminal application.

In the MEC architectures shown in FIG. 3A, FIG. 3B, and FIG. 3C, the first network element may be an EES or an EDN CS. If the first network element is an EES, step S501 may be specifically performed by an EEC in the terminal. If the first network element is an EDN CS, step S501 may be specifically performed by an EDN CC or an EEC in the terminal.

The MEC application instance discovery request message reaches the first network element from the terminal through an access network device (for example, a gNB) and a user plane gateway (for example, a UPF network element).

The MEC application instance discovery request message includes one or more of the following information:

### (1) Terminal identifier

The terminal identifier may be a subscription permanent identifier (subscription permanent identifier, SUPI), a generic public subscription identifier (generic public subscription identifier, GPSI), a media access control (media access control, MAC) address, an IP address, a mobile station international subscriber directory number (mobile subscriber ISDN number, MSISDN), or another identifier. The terminal identifier may be used to determine a location of the terminal.

### (2) MEC application name

### (3) MEC application provider name

### (4) MEC application version

### (5) MEC application identifier

An identifier information element (information element) of the MEC application may include identifiers of one or more MEC applications. An identifier of one MEC application may be an FQDN of the MEC application, a URL of the MEC application, or the like. The identifier of the MEC application is used to indicate requesting to obtain address information of a corresponding EAS. For example, if the identifier of the MEC application is an identifier of an MEC application 1, it indicates that address information of an EAS of the MEC application 1 is obtained. If the first message does not include the identifier of the MEC application, it may indicate that address information of EASs of all MEC applications is obtained.

### (6) Information about an application client

The information about the application client may be information used by the EAS to identify the terminal. The information about the application client may be the GPSI, the IP address, or an identifier formed by a combination of other characters. The information about the application client may be used to indicate to request to support EASs corresponding to these application clients.

### (7) Identifier of an EEC

The identifier of the EEC is used to identify the EEC. The identifier of the EEC may be the GPSI, the IP address, or a combination of other characters used to identify the EEC. The identifier of the EEC may be used to perform authentication and authorization on the terminal and obtain location information of the terminal (for example, determine the SUPI, the GPSI, and the like of the terminal by using the identifier of the EEC, to determine a location of the terminal).

### (8) Location information of the terminal

The location information of the terminal may be any information that can indicate the location of the terminal, such as coordinates of the location of the terminal, information (for example, an identifier of a cell) about a cell in which the terminal is located, tracking area information (for example, an identifier of a tracking area) about a tracking area in which the terminal is located, or an identifier of a data network access point of the terminal. The location information of the terminal may be used to determine the location of the terminal.

S502: The first network element determines first at least one MEC application instance.

During specific implementation of step S502, the first network element needs to first obtain the location information of the terminal, and then determine the first at least one MEC application instance based on the location information of the terminal.

Optionally, if the MEC application instance discovery request message received by the first network element includes the location information of the terminal, it is considered that the first network element obtains the location information of the terminal by receiving the MEC application instance discovery request message. If the MEC application instance discovery request message does not include the location information of the terminal, another optional method is that the first network element obtains the location information of the terminal from a telecom operator network function network element such as a 5G core network control plane function network element (for example, an NEF network element) based on the terminal identifier. The NEF network element provides an API to open a telecom network capability. The first network element sends a location query request including the terminal identifier to the NEF network element. After receiving the location query request, the NEF network element invokes a network function such as an AMF network element of a core network to obtain location information. The AMF network element sends the queried location information of the terminal to an invoker, that is, the NEF network element. The NEF network element sends a second message to the first network element. The second message includes the location information of the terminal.

S503: The first network element sends address information of the first at least one MEC application instance to the terminal. Correspondingly, the terminal receives the address information of the first at least one MEC application instance from the first network element.

For example, if the terminal requests an MEC application instance of the MEC application 1, the first MEC application instance may be the MEC application instance of the MEC application 1.

The address information of the first at least one MEC application instance may be carried in an MEC application instance discovery response message.

Address information of an MEC application instance may be an IP address, a URL, an identifier, a port number, address connection information that can be uniquely connected to the MEC application instance, or the like of the MEC application instance.

If the first at least one MEC application instance is one first MEC application instance, the first MEC application instance may be an optimal MEC application instance determined by the first network element. In this case, the terminal may use the first MEC application instance as an MEC application instance providing a service.

If the first at least one MEC application instance is a plurality of first MEC application instances, the plurality of first MEC application instances may be a plurality of optimal MEC application instances determined by the first network element. In this case, the terminal may select an optimal MEC application instance from the MEC application instances as the MEC application instance providing the service. A method for determining, by the terminal, which MEC application instance is the optimal MEC application instance is not limited in this application.

Optionally, when the first at least one MEC application instance is the plurality of first MEC application instances, the method further includes: The first network element sends priority information of the first at least one MEC application instance to the terminal. In this case, the terminal may select an MEC application instance with the highest priority from the MEC application instances as the MEC application instance providing the service. Certainly, the terminal may alternatively select another MEC application instance as the MEC application instance providing the service.

In this embodiment of this application, when the terminal requests the MEC application instance, the first network element determines, based on the obtained location information of the terminal, the MEC application instance providing the service for the terminal. This reduces a latency of packet transmission between the MEC application instance and the terminal, and improves quality of services.

Specifically, the first network element is responsible for life cycle management of an MEC application, including selection of a deployment location of the MEC application instance. The first network element stores information about each MEC application instance, including an identifier of the MEC application instance, an address of the MEC application instance, a deployment location of the MEC application instance, and a correspondence between the information. The first network element determines the first at least one MEC application instance from the MEC application instance based on the location information of the terminal and the location information of the MEC application instance. In other words, the first network element determines, as the first MEC application instance based on the location information of the terminal, one or more MEC application instances closest to a location identified by the location information. A quantity of first MEC application instances to be determined by the first network element may be predefined, preset, or specified in a protocol. This is not limited in this application.

For example, if the terminal requests the MEC application instance of the MEC application 1, the terminal can access a total of five MEC application instances of the MEC application 1, and the five MEC application instances are denoted as an MEC application instance 1, an MEC application instance 2, an MEC application instance 3, an MEC application instance 4, and an MEC application instance 5. Distances between the terminal and each of the MEC application instance 3, the MEC application instance 2, the MEC application instance 1, the MEC application instance 4, and the MEC application instance 5 are in ascending order. If the first at least one MEC application instance is one first MEC application instance, the first network element may determine that the MEC application instance 3 is the first at least one MEC application instance. If the first at least one MEC application instance is three first MEC application instances, the first network element may determine that the MEC application instance 3, the MEC application instance 2, and the MEC application instance 1 are the first at least one MEC application instance.

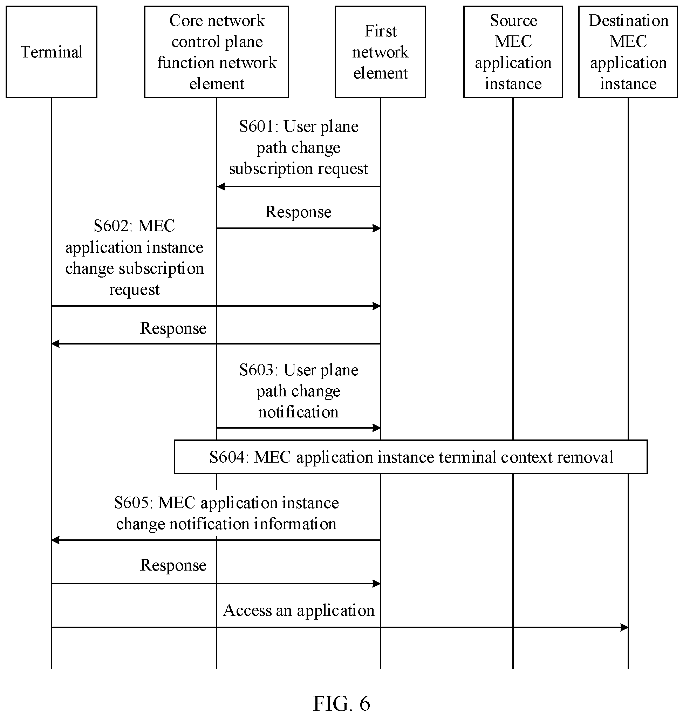

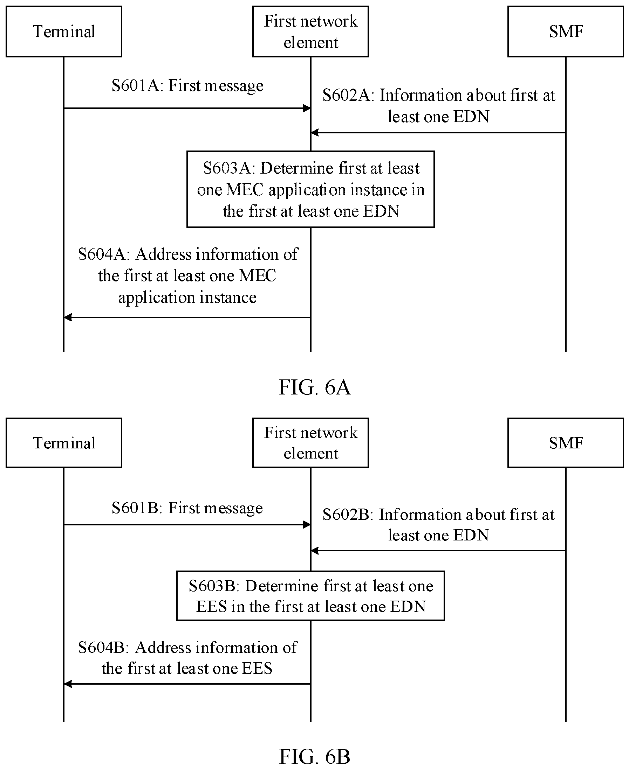

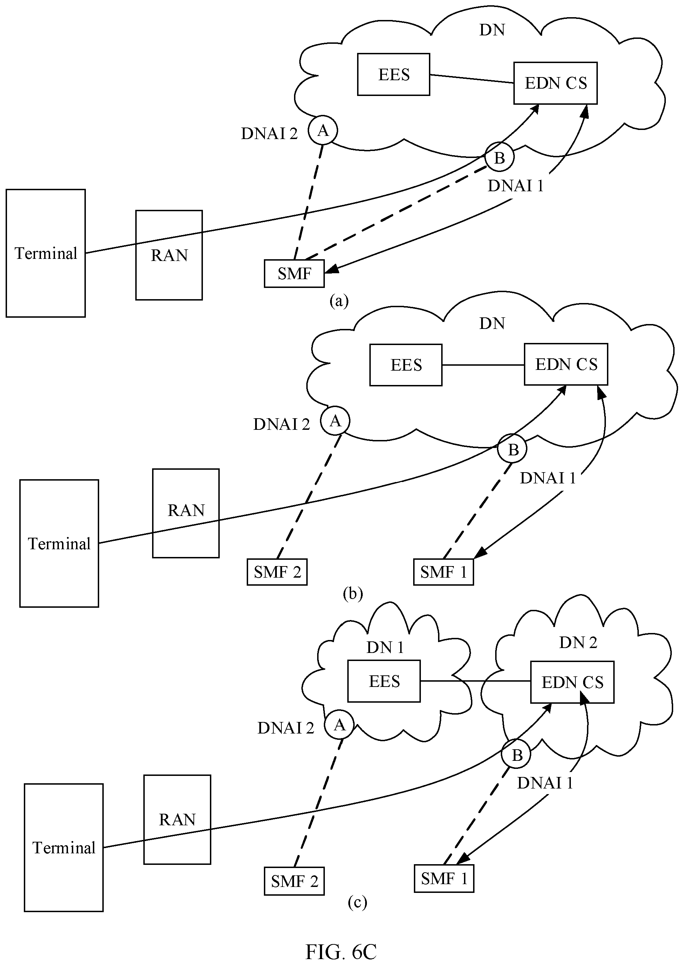

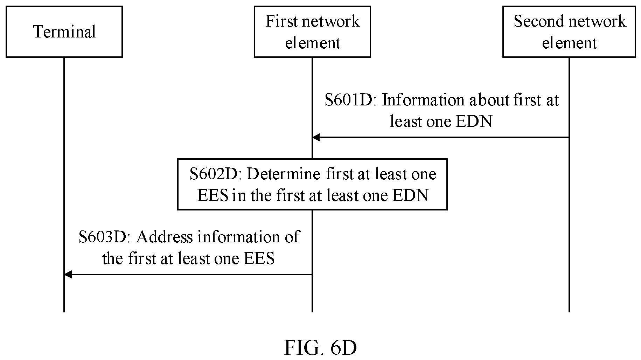

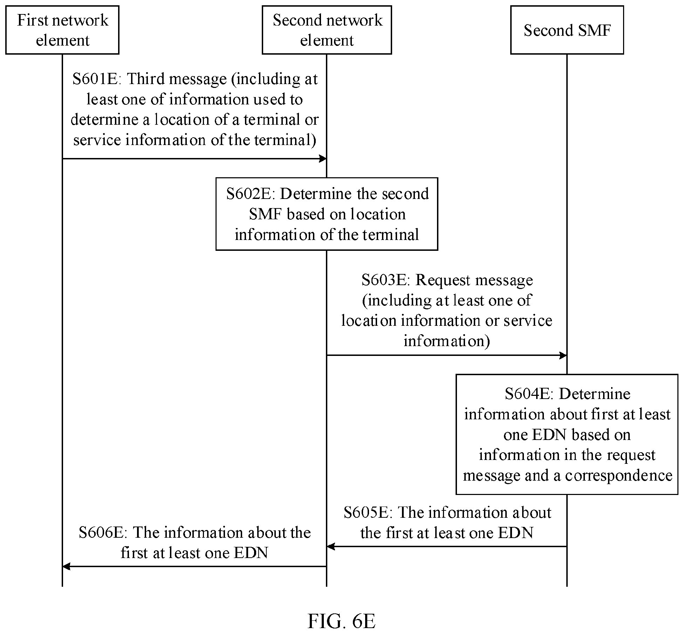

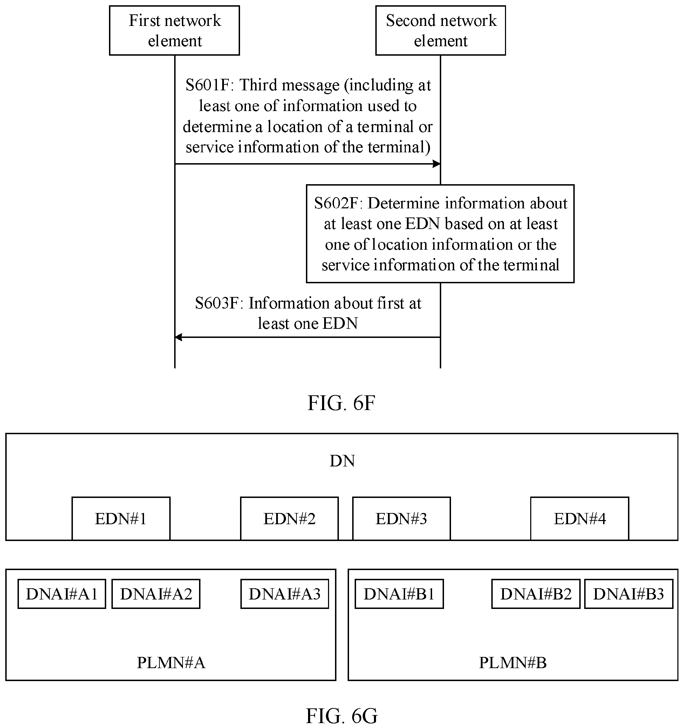

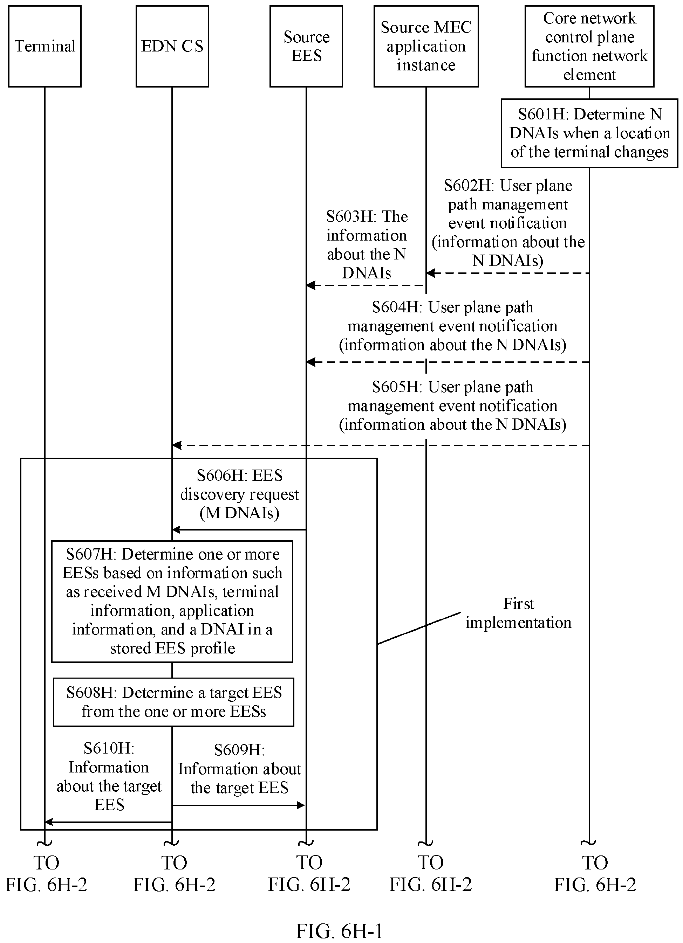

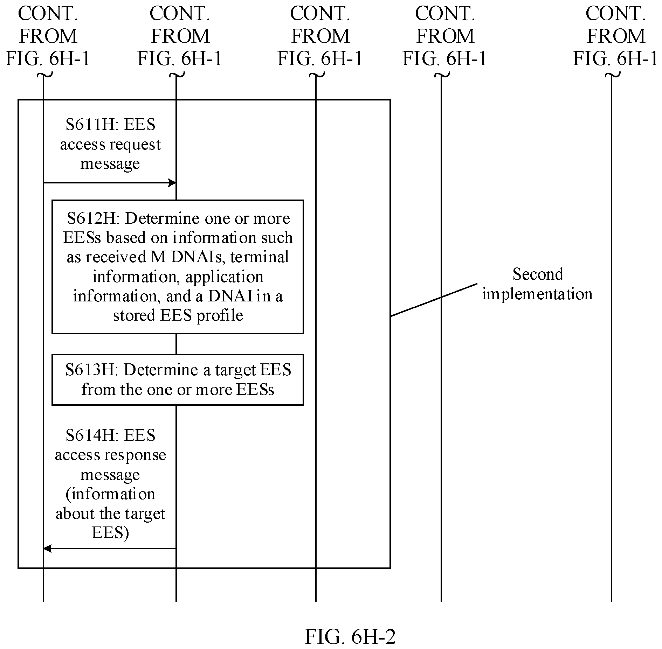

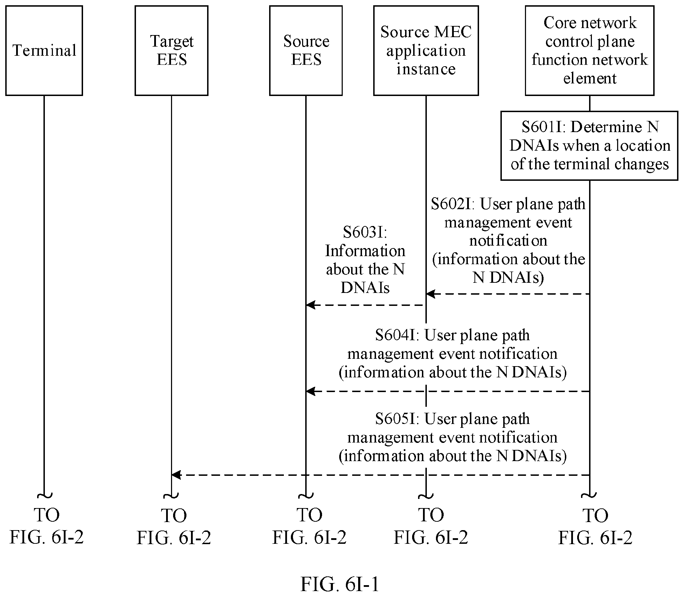

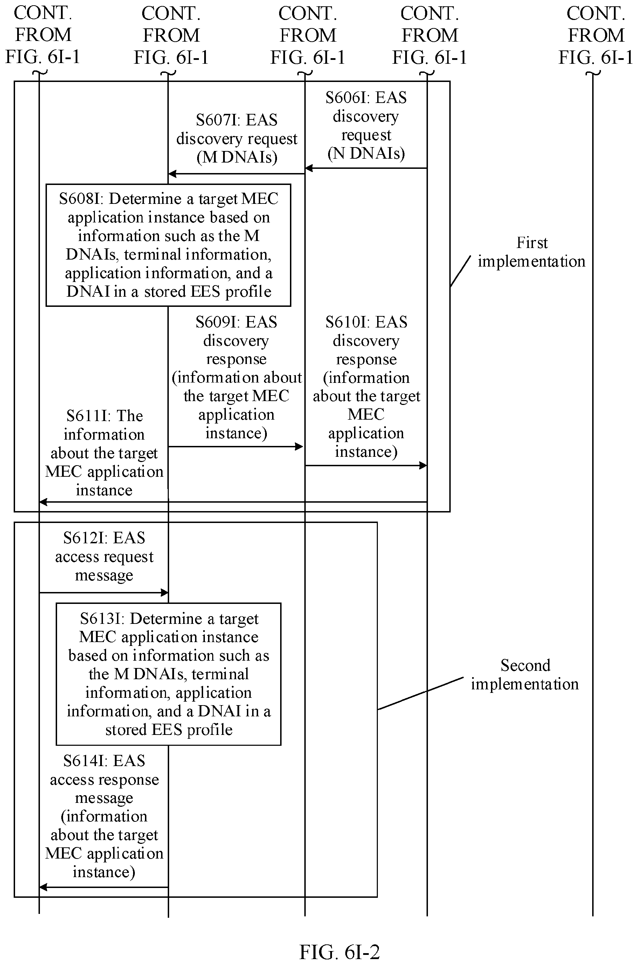

Based on the network architecture shown in FIG. 2 and the MEC architectures shown in FIG. 1, FIG. 3, FIG. 3A, FIG. 3B, and FIG. 3C, FIG. 6 is a schematic diagram of another communication method (which may also be referred to as another method for determining an MEC application instance) according to an embodiment of this application. In the embodiment shown in FIG. 6, a change procedure of the MEC application instance is used as an example. Alternatively, after the MEC application instance shown in FIG. 5 is determined, the method in this embodiment may be performed when the MEC application instance needs to be changed. As shown in FIG. 6, the method includes the following steps.

S601: A first network element subscribes to a user plane path change notification event (which is a user plane path management event) from a core network control plane function network element such as an NEF network element, a PCF network element, or an SMF network element. The first network element may subscribe to the user plane path change notification event by sending a user plane path change subscription request message. After completing sending, the first network element receives response information sent by the core network control plane function network element.

In the MEC architecture shown in FIG. 1, the first network element may be an MEC system management plane function network element. In the MEC architectures shown in FIG. 3A, FIG. 3B, and FIG. 3C, the first network element may be an EES or an EDN CS.

A terminal accesses an application network (for example, an EDN) by using a UPF network element, and different UPF network elements access application networks at different locations. When the terminal moves between different locations, a core network switches user plane paths and selects an optimal UPF network element, to reduce an access latency between the terminal and the application network and improve user experience. The user plane path changes when the terminal is switched to a new UPF network element.

S602: The terminal sends an MEC application instance change subscription request message to the first network element. The MEC application instance change subscription request message includes at least one of information such as a terminal identifier, an MEC application name, an MEC application provider name, and an MEC application version. After completing sending, the terminal receives response information sent by the first network element.

If the first network element is the MEC system management plane function network element, step S602 may be specifically performed by a terminal application. If the first network element is an EES, step S602 may be specifically performed by an EEC in the terminal. If the first network element is an EDN CS, step S602 may be specifically performed by an EDN CC in the terminal.

S603: The core network control plane function network element sends first notification information to the first network element, to notify the first network element that the user plane path of the terminal changes, where the first notification information may be user plane path change notification information. Specifically, because the terminal moves, the core network control plane function network element is triggered to select the optimal UPF network element for the terminal that moves to a new location. When a new UPF network element is switched, user plane switching is performed. The core network control plane function network element sends the user plane path change notification information to the first network element. The user plane path change notification information includes the terminal identifier (for example, an IP address or a generic public subscriber identity of the terminal), source user plane location information, and destination user plane location information. User plane location information may be a DNAI, and there is a correspondence between the DNAI and a cell.

S604: The first network element determines source MEC application instance information based on the terminal identifier and the source user plane location information, determines a destination MEC application instance based on the terminal identifier and a destination user plane location, and determines a new MEC application instance based on the destination user plane location, which may also refer to step S502 in the embodiment shown in FIG. 5. The first network element may obtain location information of a destination UPF network element by receiving the user plane path change notification information. If there are a plurality of destination MEC application instances, one MEC application instance may be selected at random or an instance with the lightest load may be selected. After determining the new MEC application instance, the first network element indicates the source MEC application instance and the destination MEC application instance to complete terminal context removal. The determined MEC application instance is the first MEC application instance.

The first network element sends response information of the user plane path change notification to the core network control plane function network element, so that a core network control plane network function network element controls a user plane to complete path switching.

In this embodiment, the destination UPF location information may also be considered as a current location of the terminal, and is a form of the location information of the terminal.

S605: The first network element sends the MEC application instance change notification information to the terminal. The MEC application instance change notification information includes information about the destination MEC application instance, for example, at least one of an MEC application name, an MEC application provider name, an MEC application version, an MEC application instance identifier, and an MEC application instance address. After receiving the MEC application instance change notification information, the terminal may send response information to the first network element.

The terminal subsequently switches to use the new MEC application instance, that is, the destination MEC application instance.

In this embodiment, when a UPF network element serving the terminal changes, a current MEC application instance may not be optimal. The first network element determines, based on the location information (the destination user plane location) of the terminal, an optimal MEC application instance after the terminal switches to a new UPF network element. This reduces a latency of packet transmission between the MEC application instance and the terminal, and improves quality of services.

Based on the network architecture shown in FIG. 2 and the MEC architectures shown in FIG. 3, FIG. 3A, FIG. 3B, and FIG. 3C, FIG. 6A is a schematic diagram of a communication method (which may also be referred to as a method for determining an application instance) according to an embodiment of this application. In the embodiment shown in FIG. 6A, a process of discovering an MEC application instance is used as an example, and includes the following steps.

S601A: A terminal sends a first message to a first network element. Correspondingly, the first network element receives the first message from the terminal.

The first message is used to request address information of the MEC application instance, and the address information of the MEC application instance is used by the terminal to connect to the MEC application instance. The first message may be an MEC application instance discovery request message.

In the MEC architectures shown in FIG. 3A, FIG. 3B, and FIG. 3C, the first network element may be an EES or an EDN CS. If the first network element is an EES, step S601A may be specifically performed by an EEC in the terminal. If the first network element is an EDN CS, step S601A may be specifically performed by an EDN CC or an EEC in the terminal.

The MEC application instance discovery request message reaches the first network element from the terminal through an access network device (for example, a gNB) and a user plane gateway (for example, a UPF network element).

Information included in the MEC application instance discovery request message in the embodiment shown in FIG. 6A is similar to the information included in the MEC application instance discovery request message in the embodiment shown in FIG. 5. Details are not described again.

S602A: The first network element obtains information about first at least one EDN from an SMF network element, where the first at least one EDN is determined based on location information of the terminal.

S603A: The first network element determines first at least one MEC application instance in the first at least one EDN.

S604A: The first network element sends address information of the first at least one MEC application instance to the terminal.

For example, if the terminal requests an MEC application instance of an MEC application 1, the first MEC application instance may be the MEC application instance of the MEC application 1.

The address information of the first at least one MEC application instance may be carried in an MEC application instance discovery response message.

Address information of an MEC application instance may be an IP address, a URL, address connection information that can be uniquely connected to the MEC application instance, or the like of the MEC application instance.

Optionally, when the first at least one MEC application instance is a plurality of first MEC application instances, the method further includes: The first network element sends priority information of the first at least one MEC application instance to the terminal. In this case, the terminal may select an MEC application instance with the highest priority from the MEC application instances as an MEC application instance providing a service. Certainly, the terminal may alternatively select another MEC application instance as the MEC application instance providing the service.

In this embodiment of this application, when the terminal requests the MEC application instance, the first network element requests the information about the first at least one EDN from the SMF network element, to determine the first at least one MEC application instance. This reduces a latency of packet transmission between the MEC application instance and the terminal, and improves quality of services.

Optionally, during specific implementation, step S602A includes:
(11) The first network element sends a third message to the SMF network element, where the third message is used to request at least one EDN that includes the MEC application instance requested by the terminal. Correspondingly, the SMF network element receives the third message from the first network element.
(12) The SMF network element sends the information about the first at least one EDN to the first network element based on the third message, where the first at least one EDN includes an EDN that includes the MEC application instance requested by the terminal. Correspondingly, the first network element receives a response message of the third message from the SMF network element.

The information about the first at least one EDN may be carried in the response message of the third message.

For example, the third message may be a user plane management event notification message subscribed by the first network element from the SMF network element, and the response message of the third message may be a user plane management event notification sent by the SMF network element to the first network element. The response message of the third message may be a notification message immediately sent by the SMF network element to the first network element after receiving a subscription message. The notification message includes information about an EDN corresponding to a current location of the terminal, for example, current user plane location information DNAI of the terminal.

The third message is used to request at least one EDN that includes the MEC application instance requested by the terminal. It may be understood that a third request message is used to request an EDN that meets a specific filter condition. The specific filter condition describes a condition that needs to be met by the MEC application instance requested by the terminal. The specific filter condition may be sent by the terminal to the first network element in the first message, or may be independently generated by the first network element. For example, the third request message may further carry a filter (filter), used to indicate to request information about the EDN that meets the filter. For example, the filter may be an MEC application instance deployed with an MEC application X, and this indicates to request an EDN of the MEC application instance deployed with the MEC application X.

Optionally, information about the first at least one EDN is used to indicate performance of a communication path between the terminal and the first at least one EDN. Because the EES and the MEC application instance are deployed in the EDN, it may also be considered that the information about the first at least one EDN may be further used to indicate: performance of a communication path between the terminal and the EES in the first at least one EDN, and/or performance of a communication path between the terminal and the MEC application instance in the first at least one EDN.

Performance of the communication path may include performance indicators such as a network topology distance of the communication path, a latency of the communication path, and a bandwidth of the communication path.

The first at least one EDN and the information about the at least one EDN may be any one of the following:

Case 1: The first at least one EDN includes all EDNs that include the MEC application instance requested by the terminal, and the information about the first at least one EDN (denoted as first information of the first at least one EDN) includes any one or more of the following information: a quantity of UPF network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

Specifically, it may also be considered that the first information of the first at least one EDN includes any one or more of the following information: a quantity of UPF network elements between the terminal and the EES in the first at least one EDN, an internal mobile network communication latency between the terminal and the EES in the first at least one EDN, an end-to-end communication latency between the terminal and the EES in the first at least one EDN, an internal mobile network communication bandwidth between the terminal and the EES in the first at least one EDN, and priority information of the communication path between the terminal and the EES in the first at least one EDN. Alternatively, it may be considered that the first information of the first at least one EDN includes any one or more of the following information: a quantity of UPF network elements between the terminal and the MEC application instance in the first at least one EDN, an internal mobile network communication latency between the terminal and the MEC application instance in the first at least one EDN, an end-to-end communication latency between the terminal and the MEC application instance in the first at least one EDN, an internal mobile network communication bandwidth between the terminal and the MEC application instance in the first at least one EDN, and priority information of the communication path between the terminal and the MEC application instance in the first at least one EDN.

For ease of description, the EDN that includes the MEC application instance requested by the terminal is denoted as a target EDN below. Optionally, the third message includes information (for example, an identifier of an MEC application) used to indicate the MEC application corresponding to the MEC application instance requested by the terminal. The SMF network element may determine, based on the information, the MEC application corresponding to the MEC application instance requested by the terminal, and further determine the EDN that includes the MEC application instance of the MEC application as the target EDN.

In the case 1, the SMF network element does not need to select from all the target EDNs, and only needs to use all the target EDNs as the first at least one EDN.

In the case 1, optionally, the response message of the third message sent by the SMF network element to the first network element includes priority information of the first at least one EDN.

Case 2: The first at least one EDN is all the target EDNs, and information about one first EDN (denoted as second information of the first EDN) is a DNAI of the first EDN.

In the case 2, the SMF network element does not need to select from all the target EDNs, and only needs to use all the target EDNs as the first at least one EDN.

In the case 2, optionally, the response message of the third message sent by the SMF network element to the first network element includes priority information of the first at least one EDN.

Case 3: The first at least one EDN is all the target EDNs, and the information about one first EDN is an identifier of the first EDN and priority information of the first EDN.

In the case 3, the SMF network element does not need to select from all the target EDNs, and only needs to determine priorities of all the target EDNs.

Case 4: The first at least one EDN is a part of target EDNs. Information about one first EDN is the first information of the first EDN.

In the case 4, the SMF network element may select a part of target EDNs from all the target EDNs as the first at least one EDN.

In the case 4, optionally, the response message of the third message sent by the SMF network element to the first network element includes priority information of the first at least one EDN.

Case 5: The first at least one EDN is a part of target EDNs, and the information about one first EDN is the DNAI of the first EDN.

In the case 5, the SMF network element may select a part of target EDNs from all the target EDNs as the first at least one EDN.

In the case 5, optionally, the response message of the third message sent by the SMF network element to the first network element includes priority information of the first at least one EDN.

Case 6: The first at least one EDN is a part of target EDNs, and the information about one first EDN is the identifier of the first EDN and the priority information of the first EDN.

In the case 6, the SMF network element may select a part of target EDNs from all the target EDNs as the first at least one EDN.

In the case 4 to the case 6, that the SMF network element selects a part of target EDNs from all the target EDNs as the first at least one EDN may be specifically implemented in any one of the following manner 1 to manner 3.

### Manner 1

The SMF network element may determine, based on the location information of the terminal and location information of the target EDN, that one or more target EDNs closest to a location of the terminal in all the target EDNs are the first at least one EDN. A shorter distance from the terminal indicates better performance of communication with the terminal.

The location information of the terminal may be carried in the third message, or the SMF network element determines the location information of the terminal based on an identifier of the terminal. Location information of the EDN may be determined based on a DNAI of the EDN. That the target EDN is closest to the terminal means that a network connection distance between the target EDN and the terminal is the smallest.

For example, based on the example shown in FIG. 3C, if the terminal requests the MEC application instance of the MEC application 1, all the target EDNs may be the EDN 1, the EDN 2, and the EDN 3. If the first at least one EDN includes two EDNs, and distances between the terminal and each of the EDN 2, the EDN 1, and the EDN 3 are in ascending order, the SMF network element may determine that the EDN 2 and the EDN 1 are the first at least one EDN.

### Manner 2

The SMF network element may determine, based on the first information of the target EDN, one or more target EDNs with best communication performance with the terminal in all the target EDNs as the first at least one EDN.

Communication performance between one EDN and the terminal may be represented by one or more parameters of a quantity of UPF network elements between the terminal and the EDN, an internal mobile network communication latency between the terminal and the EDN, and an end-to-end communication latency between the terminal and the EDN, an internal mobile network communication bandwidth between the terminal and the EDN, and a performance indicator of another communication path.

Based on different parameters representing communication performance between the EDN and the terminal, the first at least one EDN determined by the SMF network element may also be different. For example, if the communication performance between the EDN and the terminal is represented by the end-to-end communication latency between the terminal and the EDN, and if the first at least one EDN is three first EDNs, the SMF network element may use, as the first at least one EDN, three target EDNs that are in all the target EDNs and that have minimum end-to-end communication latencies with the terminal.

### Manner 3

The SMF network element may determine the first at least one EDN based on the location information of the terminal and information about a candidate EDN.

Specifically, the SMF network element may determine the first at least one EDN based on the location information of the terminal, the information about the candidate EDN, and first information of candidate or all EDNs. The candidate EDN may be the target EDN, or may not be the target EDN. This is not limited in this application.

For example, if the candidate EDN is a candidate target EDN, the SMF network element may determine one or more target EDNs with best communication performance with the terminal in candidate target EDNs as the first at least one EDN. For another example, the SMF network element may determine one or more target EDNs with best communication performance with the terminal in candidate target EDNs and one or more target EDNs with best communication performance with the terminal in non-candidate target EDNs as the first at least one EDN.

Optionally, the information about the candidate EDN is carried in the third message, and the candidate EDN is determined by the first network element based on the location information of the terminal and information about an EDN stored in the first network element. There may be one or more candidate EDNs. The first network element may determine, based on the location information of the terminal, one or more EDNs (or target EDNs) closest to the terminal as candidate EDNs (or target EDNs). In this case, the first network element may be the EDN CS. Optionally, the SMF network element may determine, based on information (for example, an identifier of the MEC application) that is in the first message and that is used to indicate the MEC application corresponding to the MEC application instance requested by the terminal, the MEC application corresponding to the MEC application instance requested by the terminal, so as to determine that an EDN that includes the MEC application instance of the MEC application is the target EDN.

In the case 1 to the case 6, optionally, priority of the first at least one EDN may be determined based on a distance between the first at least one EDN and the terminal, or may be determined based on communication performance between the first at least one EDN and the terminal. For example, the SMF network element may set a higher priority for a first EDN closer to the terminal, or set a higher priority for a first EDN with better communication performance with the terminal.

It should be noted that, in a case in which the response message of the third message includes the priority of the first at least one EDN, during specific implementation of step (12), the first network element may determine, as the first at least one MEC application instance, an MEC application instance that is requested by the terminal and that is in a part of or all the target EDNs in the first at least one EDN. In the case 1, the case 2, the case 4, and the case 5, if the response message of the third message does not include the priority of the first at least one EDN, during specific implementation of step (12), the first network element may determine the priority of the first at least one EDN based on the information about the first at least one EDN, and then determine, as the first at least one MEC application instance, an MEC application instance that is requested by the terminal and that is in a part of or all the first EDNs in the first at least one EDN.

A method for determining the priority of the first at least one EDN by the first network element is the same as that of the SMF network element. For details, refer to the foregoing description. Details are not described again.

Certainly, the first network element may alternatively determine the first at least one MEC application instance by using another method. For example, after receiving the information about the first at least one EDN, the first network element determines, with reference to load of the first at least one EDN, one or more first EDNs with relatively light load, and determines, as the first at least one MEC application instance, an MEC application instance that is requested by the terminal and that is in the one or more first EDNs with relatively light load.

In this embodiment, if the first network element is the EDN CS, after determining the first at least one MEC application instance, the first network element may further determine an EES associated with the first at least one MEC application instance. The EES associated with the first at least one MEC application instance is included in the first at least one EDN. In this case, optionally, the method further includes: The first network element sends address information of the EES associated with the first at least one MEC application instance to the terminal. After receiving the information, the terminal may first access the EES, and then access the first MEC application instance managed by the EES.

Based on the network architecture shown in FIG. 2 and the MEC architectures shown in FIG. 3, FIG. 3A, FIG. 3B, and FIG. 3C, FIG. 6B is a schematic diagram of a communication method (which may also be referred to as a method for determining an EES) according to an embodiment of this application. In the embodiment shown in FIG. 6B, a process of discovering an EES is used as an example, and includes the following steps.

S601B: A terminal sends a first message to a first network element. Correspondingly, the first network element receives the first message from the terminal.

The first message may be used to request address information of the EES, and the address information of the EES is used to connect to the EES. The first message may be an EES discovery request message.

The first network element may be an EDN CS, and step S601B may be specifically performed by an EDN CC or an EEC in the terminal.

The EES discovery request message reaches the first network element from the terminal through an access network device (for example, a gNB) and a user plane gateway (for example, a UPF network element).

Information included in the EES discovery request message is similar to the MEC application instance discovery request message in the embodiment shown in FIG. 5, and a difference lies only in that: In the EES discovery request message, a function of information about an MEC application instance in the MEC application instance discovery request message is to indicate to obtain address information of an EES of an MEC application instance indicated by information for managing the MEC application instance.

S602B: The first network element obtains information about first at least one EDN from an SMF network element, where the first at least one EDN is determined based on location information of the terminal.

S603B: The first network element determines first at least one EES in the first at least one EDN.

S604B: The first network element sends address information of the first at least one EES to the terminal. Correspondingly, the terminal receives the address information of the first at least one EES from the first network element.

For example, if the terminal requests an EES that manages an MEC application instance of an MEC application 1, a first EES may be the EES that manages the MEC application instance of the MEC application 1.

The address information of the first at least one EES may be carried in a response message of the first message, and the response message of the first message may be an EES discovery response message.

Address information of an EES may be an IP address, a URL, other address connection information that can be uniquely connected to the EES, or the like of the EES.

Optionally, when the first at least one EES includes a plurality of first EESs, the method further includes: The first network element sends priority information of the first at least one EES to the terminal. In this case, the terminal may select an EES with the highest priority from the EESs as an EES providing a service. Certainly, the terminal may alternatively select another EES as the EES providing the service.

In this embodiment of this application, when the terminal requests the EES, the first network element requests the information about the first at least one EDN from the SMF network element, to determine the first at least one EES. This reduces a latency of packet transmission between the terminal and an MEC application instance managed by the EES, and improves quality of services.

Optionally, during specific implementation, step S602B includes:

(21) The first network element sends a third message to the SMF network element, where the third message is used to request at least one EDN that includes the EES requested by the terminal. Correspondingly, the SMF network element receives the third message from the first network element.

(22) The SMF network element sends the information about the first at least one EDN to the first network element based on the third message, where the firstt at least one EDN includes an EDN that includes the EES requested by the terminal. Correspondingly, the first network element receives a response message of the third message from the SMF network element.

The information about the first at least one EDN may be carried in the response message of the third message.

For example, the third message may be a user plane management event notification message subscribed by the first network element from the SMF network element, and the response message of the third message may be a user plane management event notification sent by the SMF network element to the first network element. The response message of the third message may be a notification message immediately sent by the SMF network element to the first network element after receiving a subscription message. The notification message includes information about an EDN corresponding to a current location of the terminal, for example, current user plane location information DNAI of the terminal.

The third message is used to request at least one EDN that includes the EES requested by the terminal. It may be understood that a third request message is used to request an EDN that meets a specific filter condition. The specific filter condition describes a condition that needs to be met by the EES requested by the terminal. The specific filter condition may be sent by the terminal to the first network element in the first message, or may be independently generated by the first network element. For example, the third request message may further carry a filter (filter), used to indicate to request information about the EDN that meets the filter. For example, the filter may be an EES that manages an MEC application instance of an MEC application X, and this indicates to request an EDN that includes the EES that manages the MEC application instance of the MEC application X.

Optionally, information about the first at least one EDN is used to indicate communication performance of a communication path between the terminal and the first at least one EDN. Because the EES and the MEC application instance are deployed in the EDN, it may also be considered that the information about the first at least one EDN is used to indicate: communication performance of a communication path between the terminal and the EES in the first at least one EDN, and/or communication performance of a communication path between the terminal and the MEC application instance in the first at least one EDN.

Performance of the communication path may include performance indicators such as a network topology distance of the communication path, a latency of the communication path, and a bandwidth of the communication path.

The first at least one EDN and the information about the at least one EDN may be any one of the following:

Case 1: The first at least one EDN includes all EDNs that include the EES requested by the terminal, and the information about the first at least one EDN (denoted as first information of the first at least one EDN) includes any one or more of the following information: a quantity of UPF network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

Specifically, it may also be considered that the first information of the first at least one EDN includes any one or more of the following information: a quantity of UPF network elements between the terminal and the EES in the first at least one EDN, an internal mobile network communication latency between the terminal and the EES in the first at least one EDN, an end-to-end communication latency between the terminal and the EES in the first at least one EDN, an internal mobile network communication bandwidth between the terminal and the EES in the first at least one EDN, and priority information of the communication path between the terminal and the EES in the first at least one EDN. Alternatively, it may be considered that the first information of the first at least one EDN includes any one or more of the following information: a quantity of UPF network elements between the terminal and the MEC application instance in the first at least one EDN, an internal mobile network communication latency between the terminal and the MEC application instance in the first at least one EDN, an end-to-end communication latency between the terminal and the MEC application instance in the first at least one EDN, an internal mobile network communication bandwidth between the terminal and the MEC application instance in the first at least one EDN, and priority information of the communication path between the terminal and the MEC application instance in the first at least one EDN.

For ease of description, the EDN that includes the EES requested by the terminal is denoted as a target EDN below. Optionally, the third message includes information used to indicate the EES requested by the terminal. The SMF network element may determine, based on the information, the EES requested by the terminal, and further determine the EDN that includes the EES as the target EDN.

In the case 1, the SMF network element does not need to select from all the target EDNs, and only needs to use all the target EDNs as the first at least one EDN.

In the case 1, optionally, the response message of the third message sent by the SMF network element to the first network element includes priority information of the first at least one EDN.

Case 2: The first at least one EDN is all the target EDNs, and information about one first EDN (denoted as second information of the first EDN) is a DNAI of the first EDN.

In the case 2, the SMF network element does not need to select from all the target EDNs, and only needs to use all the target EDNs as the first at least one EDN.

In the case 2, optionally, the response message of the third message sent by the SMF network element to the first network element includes priority information of the first at least one EDN.

Case 3: The first at least one EDN is all the target EDNs, and the information about one first EDN is an identifier of the first EDN and priority information of the first EDN.

In the case 3, the SMF network element does not need to select from all the target EDNs, and only needs to determine priorities of all the target EDNs.

Case 4: The first at least one EDN is a part of target EDNs. Information about one first EDN is the first information of the first EDN.

In the case 4, the SMF network element may select a part of target EDNs from all the target EDNs as the first at least one EDN.

In the case 4, optionally, the response message of the third message sent by the SMF network element to the first network element includes priority information of the first at least one EDN.

Case 5: The first at least one EDN is a part of target EDNs, and the information about one first EDN is the DNAI of the first EDN.

In the case 5, the SMF network element may select a part of target EDNs from all the target EDNs as the first at least one EDN.

In the case 5, optionally, the response message of the third message sent by the SMF network element to the first network element includes priority information of the first at least one EDN.

Case 6: The first at least one EDN is a part of target EDNs, and the information about one first EDN is the identifier of the first EDN and the priority information of the first EDN.

In the case 6, the SMF network element may select a part of target EDNs from all the target EDNs as the first at least one EDN.

In the case 4 to the case 6, that the SMF network element selects a part of target EDNs from all the target EDNs as the first at least one EDN may be specifically implemented in any one of the following manner 1 to manner 3.

### Manner 1

The SMF network element may determine, based on the location information of the terminal and location information of the target EDN, that one or more target EDNs closest to a location of the terminal in all the target EDNs are the first at least one EDN. A shorter distance from the terminal indicates better performance of communication with the terminal.

The location information of the terminal may be carried in the third message, or the SMF network element determines the location information of the terminal based on the identifier of the terminal. Location information of the EDN may be determined based on a DNAI of the EDN. That the target EDN is closest to the terminal means that a network connection distance between the target EDN and the terminal is the smallest.

For example, based on the example shown in FIG. 3C, if the terminal requests the EES that manages the MEC application instance of the MEC application 1, all the target EDNs may be the EDN 1, the EDN 2, and the EDN 3. If the first at least one EDN includes two EDNs, and distances between the terminal and each of the EDN 2, the EDN 1, and the EDN 3 are in ascending order, the SMF network element may determine that the EDN 2 and the EDN 1 are the first at least one EDN.

### Manner 2

The SMF network element may determine, based on the first information of the target EDN, one or more target EDNs with best communication performance with the terminal in all the target EDNs as the first at least one EDN.

Communication performance between one EDN and the terminal may be represented by one or more parameters of a quantity of UPF network elements between the terminal and the EDN, an internal mobile network communication latency between the terminal and the EDN, and an end-to-end communication latency between the terminal and the EDN, an internal mobile network communication bandwidth between the terminal and the EDN, and a performance indicator of another communication path.

Based on different parameters representing communication performance between the EDN and the terminal, the first at least one EDN determined by the SMF network element may also be different. For example, if the communication performance between the EDN and the terminal is represented by the end-to-end communication latency between the terminal and the EDN, and if the first at least one EDN is three first EDNs, the SMF network element may use, as the first at least one EDN, three target EDNs that are in all the target EDNs and that have minimum end-to-end communication latencies with the terminal.

### Manner 3

The SMF network element may determine the first at least one EDN based on the location information of the terminal and information about a candidate EDN.

Specifically, the SMF network element may determine the first at least one EDN based on the location information of the terminal, the information about the candidate EDN, and first information of candidate or all EDNs. The candidate EDN may be the target EDN, or may not be the target EDN. This is not limited in this application.

For example, if the candidate EDN is a candidate target EDN, the SMF network element may determine one or more target EDNs with best communication performance with the terminal in candidate target EDNs as the first at least one EDN. For another example, the SMF network element may determine one or more target EDNs with best communication performance with the terminal in candidate target EDNs and one or more target EDNs with best communication performance with the terminal in non-candidate target EDNs as the first at least one EDN.

Optionally, the information about the candidate EDN is carried in the third message, and the candidate EDN is determined by the first network element based on the location information of the terminal and information about an EDN stored in the first network element. There may be one or more candidate EDNs. The first network element may determine, based on the location information of the terminal, one or more EDNs (or target EDNs) closest to the terminal as candidate EDNs (or target EDNs). In this case, the first network element may be the EDN CS. Optionally, the SMF network element may determine, based on information (for example, an identifier of the MEC application) that is in the first message and that is used to indicate the MEC application corresponding to the MEC application instance requested by the terminal, the MEC application corresponding to the MEC application instance requested by the terminal, so as to determine that an EDN that includes the EES that manages the MEC application instance of the MEC application is the target EDN.

In the case 1 to the case 6, optionally, priority of the first at least one EDN may be determined based on a distance between the first at least one EDN and the terminal, or may be determined based on communication performance between the first at least one EDN and the terminal. For example, the SMF network element may set a higher priority for a first EDN closer to the terminal, or set a higher priority for a first EDN with better communication performance with the terminal.

It should be noted that, in a case in which the response message of the third message includes the priority of the first at least one EDN, during specific implementation of step (22), the first network element may determine, as the first at least one EES, an EES that is requested by the terminal and that is in a part of or all the target EDNs in the first at least one EDN. In the case 1, the case 2, the case 4, and the case 5, if the response message of the third message does not include the priority of the first at least one EDN, during specific implementation of step (22), the first network element may determine the priority of the first at least one EDN based on the information about the first at least one EDN, and then determine, as the first at least one EES, an EES that is requested by the terminal and that is in a part of or all the first EDNs in the first at least one EDN.

A method for determining the priority of the first at least one EDN by the first network element is the same as that of the SMF network element. For details, refer to the foregoing description. Details are not described again.

Certainly, the first network element may alternatively determine the first at least one EES by using another method. For example, after receiving the information about the first at least one EDN, the first network element determines, with reference to load of the first at least one EDN, one or more first EDNs with relatively light load, and determines, as the first at least one EES, an EES that is requested by the terminal and that is in the one or more first EDNs with relatively light load.

In embodiments shown in FIG. 6A and FIG. 6B, an action performed by the SMF network element may also be performed by a network management system. This is not limited in this application.

It should be noted that, as shown in FIG. 6G, a PLMN#A may set local exit points DNAI#A1, DNAI#A2, and DNAI#A3 at a network edge of the PLMN#A, and a PLMN#B may set local exit points DNAI#B1, DNAI#B2, and DNAI#B3 at a network edge of the PLMN#B. The DNAI#A1 and the DNAI#A2 correspond to an EDN#1, and the DNAI#A3 corresponds to an EDN#2. It may also be understood that an (optimal) service area corresponding to the EDN#1 is an area identified by the DNAI#A1 and the DNAI#A2, an (optimal) service area corresponding to the EDN#2 is an area identified by the DNAI#A3. The DNAI#B1 corresponds to an EDN#3, and the DNAI#B2 and the DNAI#B3 correspond to an EDN#4. It may also be understood that an (optimal) service area corresponding to the EDN#3 is an area identified by the DNAI#B1, an (optimal) service area corresponding to the EDN#4 is an area identified by the DNAI#B2 and the DNAI#B3.

It should be noted that one EDN may correspond to one or more DNAIs, and all the one or more DNAIs may be used by the terminal to access the EDN (which may be specifically an EES, an EAS, or the like in the EDN). The DNAI of one first EDN in the foregoing embodiment may include at least one DNAI corresponding to the first EDN.

In the solution shown in FIG. 6B, in addition to the EDN CS, the first network element may also be an EES that manages another EES.

Refer to (a) in FIG. 6C or (b) in FIG. 6C. An EDN CS and an EES may be located in a same DN. In this case, the EDN CS and the EES may be associated with a same SMF network element (refer to (a) in FIG. 6C), or may be associated with different SMF network elements (refer to (b) in FIG. 6C). The EDN CS and the EES may alternatively be located in different DNs (refer to (c) in FIG. 6C). In this case, the EDN CS and the EES are associated with different SMF network elements.

A terminal may establish a PDU session used to access a DN to which the EES belongs, or the terminal may establish a PDU session used to access a DN to which the EDN CS belongs. When the EES and the EDN CS are located in a same DN, the terminal may establish one PDU session to access the EES and the EDN CS. Alternatively, the terminal may separately establish two PDU sessions, one is used to access the EDN CS, and the other is used to access the EES. An SMF management terminal associated with the EDN CS is configured to access a session of the EDN CS. An SMF network element associated with the EDN CS is generally a centralized (or remote) SMF, or it is understood that the SMF network element associated with the EDN CS is an SMF network element close to the EDN CS, or it is understood that the SMF network element associated with the EDN CS is irrelevant to a current location of the terminal. An SMF management terminal associated with the EES is configured to access a session of the EES. An SMF network element associated with the EES is generally an SMF network element closest to the EES, or is understood as an SMF network element close to the current location of the terminal. As shown in (b) in FIG. 6C or (c) in FIG. 6C, an SMF 1 is an SMF network element associated with the EDN CS, and an SMF 2 is an SMF network element associated with the EES. Generally, the EES or the EDN CS may communicate with the SMF network element associated with the EES or the EDN CS.

Based on (a) in FIG. 6C, (b) in FIG. 6C, or (c) in FIG. 6C, this application provides the following communication method (which may also be referred to as a method for determining an EES). As shown in FIG. 6D, the method includes the following steps.

S601D: A first network element obtains information about first at least one EDN from a second network element. The first at least one EDN is determined based on at least one of location information of the terminal or service information of the terminal.

The second network element is a first SMF network element or an NEF network element. The first network element may be the EDN CS or an EES that manages another EES. The first SMF network element may be an SMF network element associated with the first network element, or may be another SMF network element that can communicate with the first network element.

In a case, optionally, before step S601D, the method further includes step S601B. For related descriptions of step S601B, refer to the foregoing descriptions. Details are not described again. In another case, optionally, before step S601D, a source EES sends a request of a target EES to the first network element. Certainly, step S601D may also be triggered in other cases or events.

S602D: The first network element determines first at least one EES based on the information about the first at least one EDN. For related descriptions of step S602D, refer to S602B in the foregoing descriptions. Details are not described again.

S603D: The first network element sends address information of the first at least one EES to the terminal. For related descriptions of step S603D, refer to S603B in the foregoing descriptions. Details are not described again.

For related descriptions of the first EES and address information of the first EES, refer to the foregoing descriptions. Details are not described again.

Optionally, when the first at least one EES includes a plurality of first EESs, the method further includes: The first network element sends priority information of the first at least one EES to the terminal. For descriptions of the optional method, refer to related descriptions in the solution shown in FIG. 6B. Details are not described again.

In this embodiment of this application, when the terminal requests the EES, the first network element requests the information about the first at least one EDN from the second network element, to determine the first at least one EES. This reduces a latency of packet transmission between the terminal and an MEC application instance managed by the EES, and improves quality of services.

Optionally, during specific implementation, step S601D includes:
(31) The first network element sends a third message to the second network element, where the third message includes at least one of information used to determine a location of the terminal or the service information of the terminal. The third message is used to request information about at least one EDN that includes an EES matching a terminal request. Specifically, it may be further understood that the third message is used to request a DNAI of an EDN matching at least one piece of information in the third message. The second network element receives the third message from the first network element.
(32) The second network element sends the information about the first at least one EDN to the first network element based on the third message. Correspondingly, the first network element receives the information about the first at least one EDN from the second network element. The information about the first at least one EDN may be carried in a response message of the third message.

The information used to determine the location of the terminal may be directly the location information of the terminal, and may be a network location, for example, cell information (for example, a cell identifier (cell ID)) of a cell in which the terminal is located, or TA information (for example, a tracking area identity (tracking area identity, TAI)) of a tracking area (tracking area, TA) in which the terminal is located, or other geographical or administrative location information. The information used to determine the location of the terminal may also be an identifier of the terminal (UE ID), an identifier of an EEC, an identifier of an application user, or the like, and the location information of the terminal may be determined based on these identifiers. The location information of the terminal may indicate a current location of the terminal.

Service information may include network information and/or application information. The network information may be a data network name (data network name, DNN), or a DNN and slice information. The slice information may be, for example, single network slice selection assistance information (single network slice selection assistance information, S-NSSAI). The application information includes an identifier of an application or an identifier of an application client, and the identifier of the application may be an application identifier, application triplet information, or the like. The DNN and the slice information may be different from a DNN and slice information of the EDN CS corresponding to the session that is currently connected to the EDN CS by the terminal. In other words, the information may be a DNN and slice information corresponding to the EES, for example, a DNN of an edge-dedicated (Edge-dedicated) DN. The service information of the terminal may be service information corresponding to an application installed on the terminal, service information corresponding to an application being started and running on the terminal, service information of an application to be accessed by the terminal, service information of an application in which the terminal is interested, or the like. The application may be a mobile app, a Web application, or the like.

For example, the third message may be a UE network location request (UE network location request) or a DNAI request (DNAI request). The response message of the third message may be a UE network location response (UE network location response) or a DNAI response (DNAI response), and the third message and the response thereof may be a service-oriented API. For other descriptions of the third message, refer to related descriptions in the solution shown in FIG. 6B. Details are not described again.

If the third message includes the location information of the terminal, the second network element directly determines the location information of the terminal based on the third message. If the third message includes the identifier of the terminal, the identifier of the EEC, the identifier of the application user, or the like, the second network element determines the location information of the terminal based on these identifiers.

Optionally, the information about the first at least one EDN includes at least one DNAI corresponding to the first at least one EDN. Optionally, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN. For other descriptions of the information about the first at least one EDN, refer to related descriptions in the solution shown in FIG. 6B. Details are not described again.

For descriptions of determining the first at least one EES, refer to related descriptions in the solution shown in FIG. 6B. Details are not described again.

In a first case, the SMF network element may include a correspondence between at least two of location area (for example, a cell or a TA) information, information about an EDN (for example, a DNAI), and service information. For example, the SMF network element includes a mapping relationship between a cell (or a TA) and a DNAI, and a correspondence between the DNAI and a service. In this case, the second network element may determine, based on the location information of the terminal, an SMF network element whose service area matches a location area (for example, the cell or the TA) in which the terminal is located, and request to obtain the information about the first at least one EDN from the SMF network element.

In the first case, optionally, during specific implementation, the foregoing step (32) includes:

(41) The second network element determines a second SMF network element based on the location information of the terminal. For example, the second network element may determine, based on the location information of the terminal, the location area (for example, the cell or the TA) in which the terminal is located, and then determine, as the second SMF network element, the SMF network element whose service area matches the location area in which the terminal is located. For another example, the second network element requests, from an NRF network element, the SMF network element whose service area matches the location area in which the terminal is located, the NRF network element determines the SMF network element whose service area matches the location area in which the terminal is located. The NRF network element returns, to the second network element, information about the SMF network element whose service area matches the location area in which the terminal is located. The second network element obtains, from the NRF network element, the information about the SMF network element whose service area matches the location area in which the terminal is located, and determines the second SMF network element based on the information.

(42) The second network element sends a request message to the second SMF network element, where the request message includes at least one of location information or service information, the location information includes the location information of the terminal, and the service information includes the service information of the terminal. Correspondingly, the second SMF network element receives the request message from the second network element. The request message is used to obtain information about an EDN that matches at least one of the location information or the service information.

(43) When the request message includes the location information, the second SMF network element determines the information about the first at least one EDN based on the location information and a first correspondence, where the first correspondence includes a correspondence between location area information and the information about the EDN.

Alternatively, when the request message includes the service information, the second SMF network element determines the information about the first at least one EDN based on the service information and a second correspondence, where the second correspondence includes a correspondence between the service information and the information about the EDN.

Alternatively, when the request message includes the location information and the service information, the second SMF network element determines the information about the first at least one EDN based on the location information, the service information, and a third correspondence, where the third correspondence includes a correspondence among location area information, the information about the EDN, and the service information.

(44) The second SMF network element sends the information about the first at least one EDN to the second network element. Correspondingly, the second network element receives the information about the first at least one EDN from the second SMF network element.

(45) The second network element sends the information about the first at least one EDN to the first network element.

The location area information in the correspondence (the first correspondence or the third correspondence) stored by the second SMF network element may be information about a location area served by the second SMF network element.

During specific implementation of step (43), when the request message includes the location information, the second SMF network element uses information about an EDN corresponding to the location information as the information about the first at least one EDN. For example, it is assumed that the first correspondence is shown in Table 1. If the location information is a cell 1, the second SMF network element may determine that a DNAI 1 is the information about the first at least one EDN. If the location information is a cell 2, the second SMF network element may determine that a DNAI 2 and a DNAI 3 are the information about the first at least one EDN.

**Table 1**

| Cell | Information about an EDN |
|---|---|
| Cell 1 | DNAI 1 |
| Cell 2 | DNAI 2 |
| | DNAI 3 |

During specific implementation of step (43), when the request message includes the service information, the second SMF network element uses information about an EDN corresponding to the service information as the information about the first at least one EDN. For example, it is assumed that the second correspondence is shown in Table 2. If the service information is a DNN 1, the second SMF network element may determine that the DNAI 1 is the information about the first at least one EDN. If the service information is a DNN 2, the second SMF network element may determine that the DNAI 2 and the DNAI 3 are the information about the first at least one EDN.

**Table 2**

| DNN | Information about an EDN |
|---|---|
| DNN 1 | DNAI 1 |
| DNN 2 | DNAI 2 |
| | DNAI 3 |

During specific implementation of step (43), when the request message includes the location information and the service information, the second SMF network element uses information about an EDN corresponding to both the location information and the service information as the information about the first at least one EDN. For example, it is assumed that the third correspondence is shown in Table 3. If the location area is the cell 2, and the service information is the DNN 1, the second SMF network element may determine that the DNAI 2 is the information about the first at least one EDN.

**Table 3**

| Cell | DNAI | DNN |
|---|---|---|
| Cell 1 | DNAI 1 | DNN 1 |
| Cell 2 | DNAI 2 | |
| | DNAI 3 | DNN 2 |
| Cell 3 | DNAI 4 | |

In a second case, the NEF network element may include a correspondence between at least two of location area (for example, a cell or a TA) information, information about an EDN (for example, a DNAI), and service information. In this case, the second network element may be the NEF network element, and the second network element may determine the information about the first at least one EDN based on at least one of the location information or the service information of the terminal.

In the second case, optionally, during specific implementation, the foregoing step (32) includes:
(51) The second network element determines the information about the first at least one EDN based on the location information of the terminal and a first correspondence, where the first correspondence includes a correspondence between location area information and the information about the EDN.

Alternatively, the second network element determines the information about the first at least one EDN based on the service information of the terminal and a second correspondence, where the second correspondence includes a correspondence between the service information and the information about the EDN.

Alternatively, the second network element determines the information about the first at least one EDN based on the location information and the service information of the terminal, and a third correspondence, where the third correspondence includes a correspondence among location area information, the information about the EDN, and the service information.

(52) The second network element sends the information about the first at least one EDN to the first network element.

The NEF network element may store at least one of the first correspondence, the second correspondence, and the third correspondence. Location area information in the correspondence stored in the NEF network element may be information about all location areas. A specific implementation process of step (51) is similar to that of step (43), and a difference only lies in that step (51) is performed by the second network element.

During specific implementation of step (32), if the information about the first at least one EDN is determined based on the location information of the terminal and the first correspondence, the determined information about the first at least one EDN may be optimal (physically closest to the terminal, with a shortest network connection path, or with an optimal network connection path). This ensures fast data transmission of the terminal. If the information about the first at least one EDN is determined based on the service information of the terminal and the second correspondence, the determined information about the first at least one EDN may meet a service requirement of the terminal. If the information about the first at least one EDN is determined based on the location information and the service information of the terminal and the third correspondence, the determined information about the first at least one EDN may be optimal and meets a service requirement of the terminal. This ensures fast data transmission of the terminal.

Refer to FIG. 6C. In (a) in FIG. 6C, the EES and the EDN CS are located in the same DN. If the EDN CS provides the service information for the SMF network element, the SMF network element may determine, based on the service information, which DNAI should be fed back to the EDN CS. In (b) in FIG. 6C, when the EES and the EDN CS are located in the same DN and use different sessions, and the different sessions are managed by different SMF network elements, when the EDN CS requests a corresponding DNAI from the SMF 1 for the terminal, the DNAI 2 should be the optimal DNAI, but the SMF 1 may not provide the DNAI 2. In (c) in FIG. 6C, the EES and the EDN CS are located in different DNs and use different sessions, and the different sessions are managed by different SMF network elements. When the EDN CS requests a DNAI from the SMF 1 for the terminal, the DNAI 2 should be the optimal DNAI, but the SMF 1 may not provide the DNAI 2. During specific implementation of step (32), the NEF network element or the first SMF network element sends the request message to the second SMF network element, so that the second SMF network element can send the optimal DNAI to the NEF network element or the first SMF network element, and the first network element obtains the optimal DNAI. Alternatively, the NEF network element may determine the optimal DNAI by storing the foregoing correspondence, so that the first network element obtains the optimal DNAI.

In addition, if there is no specific service when the terminal requests to obtain the EES, and there is no session corresponding to the EES or an EAS managed by the EES in this case, the corresponding DNAI cannot be obtained by using an existing mechanism in which a user plane path management event (UP path management event NOTI) is subscribed by using an AF request (AF request). This application provides a session-independent method for determining a DNAI for the terminal. A platform corresponding to the DNAI supports a service to be accessed by the terminal, so that an optimal DNAI corresponding to the service accessed by the terminal may be obtained.

To make the method shown in FIG. 6D clearer, the following separately describes, by using examples with reference to FIG. 6E and FIG. 6F, procedures in which the first network element obtains the information about the first at least one EDN in the method shown in FIG. 6D in the first case and the second case.

Refer to FIG. 6E. In the first case, a procedure of the method shown in FIG. 6E includes the following steps.

S601E: A first network element sends a third message to a second network element, where the third message includes at least one of information used to determine a location of a terminal or service information of the terminal. Correspondingly, the second network element receives the third message from the first network element.

After receiving the third message, the second network element may determine location information of the terminal based on the information that is in the third message and that is used to determine the location of the terminal. For details, refer to the foregoing description. Details are not described again.

The third message may be a UE network location request or a DNAI request.

S602E: The second network element determines a second SMF network element based on the location information of the terminal.

During specific implementation of step S602E, if the second network element includes topology information of an SMF network element, the second network element determines, based on the location information of the terminal, that an SMF network element whose service area matches a location area in which the terminal is located is the second SMF network element.

If the second network element does not include the topology information of the SMF network element, the second network element interacts with an NRF network element to determine the second SMF network element. Specifically, the second network element sends an SMF request message (for example, an NF request (NF request)) to the NRF network element. The SMF request message is used to request information about the SMF network element whose service area matches the location area in which the terminal is located. The SMF request message includes the location information of the terminal, and optionally further includes an NF type (type). The NF type is an SMF type. The NRF network element searches for information about the second SMF network element for the NEF network element based on the information in the SMF request message and network information (a DNN and slice information), and returns the information about the second SMF network element to the NEF network element. The information about the second SMF network element may be carried in an SMF request response (for example, an NF response (NF response)).

S603E: The second network element sends a request message to the second SMF network element, where the request message includes at least one of location information or service information. Correspondingly, the second SMF network element receives the request message from the second network element.

For example, the request message may be the UE network location request or the DNAI request.

S604E: The second SMF network element determines information about first at least one EDN based on information in the request message and a correspondence (a first correspondence, a second correspondence, or a third correspondence).

For related descriptions of step S604E, refer to the foregoing descriptions. Details are not described again.

S605E: The second SMF network element sends the information about the first at least one EDN to the second network element.

For example, the information about the first at least one EDN may be carried in a UE network location response or a DNAI response sent by the second SMF network element to the second network element.

S606E: The second network element sends the information about the first at least one EDN to the first network element.

For example, the information about the first at least one EDN may be carried in the UE network location response (UE network location response) or the DNAI response sent by the second network element to the first network element.

Refer to FIG. 6F. In the second case, a second network element is an NEF network element, and a procedure of the method shown in FIG. 6F includes the following steps.

S601F is the same as step S601E.

S602F: The second network element determines information about at least one EDN based on at least one of the location information or the service information of the terminal and a correspondence (a first correspondence, a second correspondence, or a third correspondence).

For an implementation process of step S602F, refer to the foregoing process. Details are not described again.

S603F: The second network element sends information about first at least one EDN to the first network element.

For example, the information about the first at least one EDN may be carried in a UE network location response or a DNAI response sent by the second network element to the first network element. Actions performed by the NEF network element in the solutions shown in FIG. 6D, FIG. 6E, and FIG. 6F may alternatively be performed by an NRF network element, a UDR, and the like. This is not limited in this application.

The foregoing embodiments related to FIG. 6A, FIG. 6B, and FIG. 6D may also be applied to a scenario in which the location of the terminal changes. When the location of the terminal changes, an MEC application instance or an EES accessed by the terminal needs to change, so as to reduce a latency of packet transmission between the MEC application instance and the terminal, and improve quality of services. In this case, an EES accessed by the terminal before the location changes may be referred to as a source EES. The following describes implementation differences between the embodiments related to FIG. 6A, FIG. 6B, and FIG. 6D in the scenario in which the location of the terminal changes. For other parts, refer to content in the corresponding embodiments for understanding. Details are not described again.

In the embodiment related to FIG. 6A, in S602A, the first network element may obtain the information about the first at least one EDN from the SMF network element, or may obtain the information about the first at least one EDN from the source EES. The information about the first at least one EDN in the source EES may be from the SMF network element /AMF network element. In S604A, the first network element may send the address information of the first at least one MEC application instance to the terminal, or may send the address information of the first at least one MEC application instance to the source EES. After the source EES obtains the address information of the first at least one MEC application instance, if the first at least one MEC application instance includes a plurality of first MEC application instances, the source EES may determine a first MEC application instance as a new first MEC application instance that provides a service for the terminal, and send, to the terminal, information about the new first MEC application instance that provides a service for the terminal, or send, to the terminal through the first network element, information about the new first MEC application instance that provides a service for the terminal, so that the terminal accesses the new first MEC application instance. If the first at least one MEC application instance is one first MEC application instance, the source EES determines that the first MEC application instance is the new first MEC application instance that provides a service for the terminal. In this case, the new first MEC application instance that provides a service for the terminal may be determined by the first network element, and the first network element sends the new first MEC application instance to the terminal, so that the terminal accesses the new first MEC application instance. If the first network element sends the address information of the first at least one MEC application instance to the source EES, the first network element may further send priority information of the first at least one MEC application instance to the source EES. In this case, the source EES may select a first MEC application instance with the highest priority from the first at least one MEC application instance as the new first MEC application instance that provides a service for the terminal. Certainly, the source EES may alternatively select another first MEC application instance as the new first MEC application instance that provides a service for the terminal. If the first network element sends the address information of the first at least one MEC application instance to the source EES, the first network element may further send, to the source EES, address information of an EES associated with the first at least one MEC application instance. After receiving the information, the source EES may determine address information of an EES associated with the new first MEC application instance that provides a service for the terminal, and send the information about the EES to the terminal or send the information about the EES to the terminal through the first network element, so that the terminal accesses the new first MEC application instance that is managed by the EES and that provides a service for the terminal. If the first network element obtains the information about the first at least one EDN from the source EES, in step (11) and step (12), the first network element may interact with the source EES to obtain the information about the first at least one EDN, it may be understood that the SMF network element in step (11) and step (12) is replaced with the source EES. Details are not described again. The first network element may be the EDN CS.

In the embodiment related to FIG. 6B, in S602B, the first network element may obtain the information about the first at least one EDN from the SMF network element, or may obtain the information about the first at least one EDN from the source EES. The information about the first at least one EDN in the source EES may be from the SMF network element /AMF network element. In S604B, the first network element may send the address information of the first at least one EES to the terminal, or may send the address information of the first at least one EES to the source EES. After the source EES obtains the address information of the first at least one EES, if the first at least one EES includes a plurality of first EESs, the source EES may determine a first EES as a new first EES that provides a service for the terminal, and send, to the terminal, information about the new first EES that provides a service for the terminal, or send, to the terminal through the first network element, information about the new first EES that provides a service for the terminal, so that the terminal accesses the new first EES. If the first at least one EES is one first EES, the source EES determines that the first EES is the new first EES that provides a service for the terminal. In this case, the new first EES that provides a service for the terminal may be determined by the first network element, and the first network element sends the new first EES to the terminal, so that the terminal accesses the new first EES. If the first network element sends the address information of the first at least one EES to the source EES, the first network element may further send priority information of the first at least one EES to the source EES. In this case, the source EES may select a first EES with the highest priority from the first at least one EES as the new first EES that provides a service for the terminal. Certainly, the source EES may alternatively select another first EES as the new first EES that provides a service for the terminal. If the first network element obtains the information about the first at least one EDN from the source EES, in step (21) and step (22), the first network element may interact with the source EES to obtain the information about the first at least one EDN, it may be understood that the SMF network element in step (21) and step (22) is replaced with the source EES. Details are not described again. The first network element may be the EDN CS.

In the embodiment related to FIG. 6D, the second network element may alternatively be the source EES. In S603D, the first network element may send the address information of the first at least one EES to the terminal, or may send the address information of the first at least one EES to the source EES. After the source EES obtains the address information of the first at least one EES, if the first at least one EES includes a plurality of first EESs, the source EES may determine a first EES as a new first EES that provides a service for the terminal, and send, to the terminal, information about the new first EES that provides a service for the terminal, or send, to the terminal through the first network element, information about the new first EES that provides a service for the terminal, so that the terminal accesses the new first EES. If the first at least one EES is one first EES, the source EES determines that the first EES is the new first EES that provides a service for the terminal. In this case, the new first EES that provides a service for the terminal may be determined by the first network element, and the first network element sends the new first EES to the terminal, so that the terminal accesses the new first EES. If the first network element sends the address information of the first at least one EES to the source EES, the first network element may further send priority information of the first at least one EES to the source EES. In this case, the source EES may select a first EES with the highest priority from the first at least one EES as the new first EES that provides a service for the terminal. Certainly, the source EES may alternatively select another first EES as the new first EES that provides a service for the terminal. The first network element may be the EDN CS.

Actions performed by the SMF network element in the foregoing embodiments may also be performed by the AMF network element. In the foregoing embodiments, the DNAI of the first at least one EDN includes a DNAI of an EES in the first at least one EDN and/or a DNAI of an MEC application instance in the first at least one EDN. The DNAI of the EES may be understood as being related to data traffic (traffic) corresponding to the EES. The DNAI of the MEC application instance may be understood as being related to data traffic corresponding to the MEC application instance.

For ease of understanding, the following describes, by using an example, a method provided in an embodiment of this application in a scenario in which a location of a terminal changes. FIG. 6H-1 and FIG. 6H-2 are a process of determining a new EES that provides a service for a terminal, and FIG. 61-1 and FIG. 61-2 are a process of determining a new MEC application instance that provides a service for the terminal.

Refer to FIG. 6H-1 and FIG. 6H-2. It is assumed that an MEC application instance, an EES, and an EDN CS subscribe to a user plane path change notification event from a core network control plane function network element, for example, an NEF network element, an AMF network element, or an SMF network element. For this process, refer to descriptions in the embodiment related to FIG. 6. Details are not described again. In this case, a process of determining a new EES (denoted as a target EES) that provides a service for a terminal includes the following:

S601H: When a location of the terminal changes, the core network control plane function network element determines at least one DNAI (denoted as N DNAIs). The N DNAIs are determined based on a changed location of the terminal, and may include DNAIs corresponding to one or more of user plane data of the terminal and the EDN CS, user plane data of the terminal and the EES, or user plane data of the terminal and the MEC application instance. For a specific determining process, refer to the foregoing description. Details are not described again.

After S601H, the EDN CS or a source EES may obtain information about the N DNAIs. A process in which the source EES obtains the information about the N DNAIs may be implemented by using S602H and S603H (in this case, the N DNAIs may generally include DNAIs corresponding to one or more of the user plane data of the terminal and the EES or the user plane data of the terminal and the MEC application instance), or is implemented by using S604H. A process in which the EDN CS obtains the information about the N DNAIs may be implemented by using S605H (in this case, the N DNAIs may generally include DNAIs corresponding to one or more of the user plane data of the terminal and the EDN CS, the user plane data of the terminal and the EES, or the user plane data of the terminal and the MEC application instance).

S602H: The core network control plane function network element sends a user plane path management event notification to a source MEC application instance, where the notification includes the information about the N DNAIs. The N DNAIs may be DNAIs corresponding to the source MEC application instance, and may be further understood as DNAIs corresponding to the user plane data of the terminal and the MEC application instance. The source MEC application instance is an MEC application instance accessed by the terminal before the location changes. When the core network control plane function network element is the AMF network element or the SMF network element, the user plane path management event notification may be sent to the source MEC application instance through the NEF network element.

S603H: The source MEC application instance sends the information about the N DNAIs to the source EES.

The information about the N DNAIs may be carried in an EAS discovery request (EAS discovery request), an EAS subscription request, or an EAS subscription request update message.

S604H: The core network control plane function network element sends the user plane path management event notification to the source EES, where the notification includes the information about the N DNAIs. The N DNAIs may include a DNAI of the EES and/or a DNAI of the MEC application instance, and may be further understood as DNAIs corresponding to one or more of the user plane data of the terminal and the EES and/or the user plane data of the terminal and the MEC application instance. When the core network control plane function network element is the AMF network element or the SMF network element, the user plane path management event notification may be sent to the source EES through the NEF network element.

S605H: The core network control plane function network element sends the user plane path management event notification to the EDN CS, where the notification includes the information about the N DNAIs. The N DNAIs may include DNAIs of one or more of the EDN CS, the EES, and the MEC application instance, and may be further understood as the DNAIs corresponding to one or more of the user plane data of the terminal and the EDN CS, the user plane data of the terminal and the EES, or the user plane data of the terminal and the MEC application instance. When the core network control plane function network element is the AMF network element or the SMF network element, the user plane path management event notification may be sent to the EDN CS through the NEF network element.

It should be noted that when locations of the terminal are the same, the DNAI of the EDN CS, the DNAI of the EES, and the DNAI of the MEC application instance may be the same or may be different. This is not limited in this application. Generally, it may be considered that the DNAI of the EES is the same as the DNAI of the MEC application instance.

It should be noted that, because meanings of the N DNAIs are different in different implementations, a value of N in S602H and S603H, a value of N in S604H, and a value of N in S605H may be the same or may be different. This is not limited in this application.

In the embodiment shown in FIG. 6H-1 and FIG. 6H-2, in a first implementation, the target EES may be determined by using the following S606H to S610H. In a second implementation, the target EES may be determined by using the following S611H to S614H.

S606H: The source EES sends an EES discovery request to the EDN CS, where the EES discovery request carries M DNAIs.

The M DNAIs may be N DNAIs obtained from the core network control plane function network element, or may be N DNAIs obtained from the source MEC application instance, or may include the N DNAIs obtained from the core network control plane function network element and the N DNAIs obtained from the source MEC application instance, or may be different DNAIs in the N DNAIs obtained from the core network control plane function network element and the N DNAIs obtained from the source MEC application instance. The source EES may perform aggregation and deduplication on DNAIs obtained in different ways to obtain the M DNAIs, or may directly send the foregoing DNAIs obtained in different ways to the EDN CS as the M DNAIs.

The EES discovery request may further include terminal information (for example, an identifier of the terminal, and location information of the terminal), and application information (for example, an identifier of an application, an MEC application instance, or a profile (profile) of an application client (Application client, AC)).

S607H: The EDN CS determines one or more EESs based on information such as the received M DNAIs, the terminal information, the application information, and a DNAI in a stored EES profile.

The DNAI in the EES profile may include the DNAI of the EES and/or the DNAI of the MEC application instance. The MEC application instance is an MEC application instance registered with the EES. The DNAI of the EES may be the same as or different from the DNAI of the MEC application instance.

During specific implementation of S607H, the EDN CS may match (select/determine), based on the received M DNAIs, the terminal information, the application information, and the DNAI in the stored EES profile, one or more optimal EESs that can provide a required application service for the terminal.

S608H: The EDN CS determines the target EES from the one or more EESs.

During specific implementation of S608H, the EDN CS may select an optimal EES (for example, with a shortest physical distance to the terminal, with a shortest network connection path to the terminal, or with an optimal network connection path to the terminal) from the one or more EESs as the target EES. The EDN CS may also use a part of better EESs in the plurality of EESs as the target EES.

S609H: The EDN CS returns information about the target EES to the source EES.

After S609H, an interaction operation used for context removal may be performed between the source EES and the target EES. For example, the source EES sends the EAS discovery request to the target EES, and the source EES carries, in the request, a condition (for example, a profile of an application client and a key performance indicator requirement of a corresponding application) used to filter the MEC application instance. The target EES selects, based on the EAS discovery request, a target MEC application instance that meets the filter condition for the source EES, and the target EES sends selected one or more target MEC application instances to the source EES.

S610H: Optionally, the EDN CS sends the information about the target EES to the terminal.

After S610H, the terminal may access the target EES, for example, send information about the MEC application instance to the target EES, or send an application context removal request to the target EES.

S611H: Optionally, the terminal (which may be specifically an EEC in the terminal) sends an EES access request message to the EDN CS, where the EES access request message is used to obtain access information of the EES.

The EES access request message may be a service configuration request, a service configuration subscription, an EES subscription request, an EES request message, or the like. The EES access request message may include the terminal information and the application information.

S612H is the same as S607H. The M DNAIs in S612H may be the N DNAIs obtained by using S605H.

S613H is the same as S608H.

S614H: The EDN CS sends an EES access response message to the terminal, where the EES access response message includes the information about the target EES.

The EES access response message may be a service configuration response, a service configuration notification, an EES notification, an EES response message, or the like. After S614H, the terminal may access the target EES, for example, send information about the MEC application instance to the target EES, or send an application context removal request to the target EES.

The second implementation may also be applied to a process in which a terminal initially selects an EES.

Refer to FIG. 61-1 and FIG. 61-2. It is assumed that an MEC application instance, an EES, and an EDN CS subscribe to a user plane path change notification event from a core network control plane function network element, for example, an NEF network element, an AMF network element, or an SMF network element. For this process, refer to descriptions in the embodiment related to FIG. 6. Details are not described again. In the embodiment shown in FIG. 61-1 and FIG. 61-2, a target EES selects a new MEC application instance (denoted as a target MEC application instance) that provides a service for the terminal, and then sends the target MEC application instance to a source EES or the terminal. Specifically, a process of determining the target MEC application instance includes the following:

S601I is the same as S601H.

After S601I, the source EES or the target EES may obtain information about N DNAIs. A process in which the source EES obtains the information about the N DNAIs may be implemented by using S602I and S603I, or may be implemented by using S604I. A process in which the target EES obtains the information about the N DNAIs may be implemented by using S605I.

S602I is the same as S602H.

S603I is the same as S603H.

S604I is the same as S604H.

S605I: The core network control plane function network element sends a user plane path management event notification to the target EES, where the notification includes the information about the N DNAIs. The N DNAIs may include a DNAI of the EES or a DNAI of the MEC application instance, and may be further understood as DNAIs corresponding to one or more of user plane data of the terminal and the EES or user plane data of the terminal and the MEC application instance. When the core network control plane function network element is the AMF network element or the SMF network element, the user plane path management event notification may be sent to the target EES through the NEF network element.

Information about the target EES may be notified by the source EES to the core network control plane function network element, or may be notified by the EDN CS to the core network control plane function network element.

It should be noted that, because meanings of the N DNAIs are different in different implementations, a value of N in S602I and S603I, a value of N in S604I, and a value of N in S605I may be the same or may be different. This is not limited in this application.

In the embodiment shown in FIG. 61-1 and FIG. 61-2, in a first implementation, the target MEC application instance may be determined by using the following S606I to S611I. In a second implementation, the target MEC application instance may be determined by using the following S612I to S614I.

S606I: A source MEC application instance sends an EAS discovery request to the source EES, where the EAS discovery request carries the N DNAIs. The N DNAIs may be N DNAIs obtained by the source MEC application instance from the core network control plane function network element.

S607I: The source EES sends the EAS discovery request to the target EES, where the EAS discovery request carries M DNAIs.

The source EES may obtain information about the target EES from the EDN CS. The M DNAIs may be N DNAIs obtained from the core network control plane function network element, or may be N DNAIs obtained from the source MEC application instance, or may include the N DNAIs obtained from the core network control plane function network element and the N DNAIs obtained from the source MEC application instance, or may be different DNAIs in the N DNAIs obtained from the core network control plane function network element and the N DNAIs obtained from the source MEC application instance. The source EES may perform aggregation and deduplication on DNAIs obtained in different ways to obtain the M DNAIs, or may directly send the foregoing DNAIs obtained in different ways to the target EES as the M DNAIs.

The EAS discovery request may further include terminal information (for a meaning, refer to the foregoing description) and application information (for a meaning, refer to the foregoing description).

Before S607I, the source EES may discover the information about the target EES from the EDN CS.

S608I: The target EES determines the target MEC application instance based on information such as the M DNAIs, the terminal information, the application information, and a DNAI in a stored EES profile.

S609I: The target EES sends an EAS discovery response to the source EES, where the EAS discovery response includes information about the target MEC application instance. The EAS discovery response is a response message of the EAS discovery request sent by the source EES.

S610I: The source EES sends the EAS discovery response to the source MEC application instance, where the EAS discovery response includes the information about the target MEC application instance. The EAS discovery response is a response message of the EAS discovery request sent by the source MEC application instance.

It should be noted that the EAS discovery request sent by the source MEC application instance may alternatively be an EAS subscription request, used to subscribe to the information about the target MEC application instance used for application context removal (application context removal, ACR). In this case, the response message of the EAS discovery request sent by the source MEC application instance may be an EAS notification response.

S611I: The source MEC application instance sends the information about the target MEC application instance to the terminal. In a subsequent process, the terminal may access the target MEC application instance. For example, the terminal may switch user plane data from the source MEC application instance to the target MEC application instance.

In another possible implementation, the source EES may send the information about the target MEC application instance to the terminal. For example, the source EES may carry the information about the target MEC application instance in an application context removal subscription notification message that is sent to the EEC. In this case, the EEC may previously subscribe to an application context removal event notification from the source EES, and specifically, subscribe to the information about the target MEC application instance in application context removal. S6121: The terminal (which may be specifically an EEC in the terminal) sends the EAS discovery request to the target EES, where the EAS discovery request is used to obtain access information of the MEC application instance.

The EAS discovery request may be an EAS access message or an EAS subscription request message. The EAS discovery request may include the terminal information and the application information.

S613I is the same as S608I. The M DNAIs in S612I may be the N DNAIs obtained by using S605I.

S614I: The target EES sends an EAS access response message to the terminal, where the EAS access response message includes the information about the target MEC application instance. The EAS access response message may be the EAS discovery response or an EAS notification.

In the foregoing embodiment, the EDN CS may also be referred to as an edge configuration server (edge configuration server, ECS).

The foregoing mainly describes the solutions provided in this application from a perspective of interaction between network elements. It may be understood that, to implement the foregoing functions, the network elements include corresponding hardware structures and/or software modules for performing the functions. A person skilled in the art should be easily aware that, in combination with the examples of units and algorithm steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It may be understood that in the foregoing method embodiments, corresponding steps or operations implemented by the terminal, the first network element, and the SMF network element may also be implemented by a component (for example, a chip or a circuit) configured in the terminal, the first network element, and the SMF network element.

An embodiment of this application further provides an apparatus configured to implement any one of the foregoing methods, for example, provides an apparatus including units (or means) configured to implement steps performed by the first network element in any one of the foregoing methods.

FIG. 7 is a schematic diagram of a communication apparatus according to an embodiment of this application. The apparatus is configured to implement steps performed by the corresponding first network element in the foregoing method embodiments. As shown in FIG. 7, the apparatus 700 includes a sending unit 710, a receiving unit 720, and a processing unit 730.

The receiving unit 720 is configured to receive a first message sent by a terminal to a first network element. The first message may be an MEC application instance discovery request message.

The processing unit 730 is configured to determine first at least one MEC application instance, and is specifically configured to: obtain location information of the terminal, and then determine the first at least one MEC application instance based on the location information.

In a possible implementation method, if the MEC application instance discovery request message received by the first network element includes the location information of the terminal, it is considered that the first network element obtains the location information of the terminal by receiving the MEC application instance discovery request message. If the MEC application instance discovery request message does not include the location information of the terminal, another optional method is that the first network element obtains the location information of the terminal from a telecom operator network function such as a 5G core network control plane network function (for example, an NEF) based on a terminal identifier. The NEF network element provides an API to open a telecom network capability. The first network element sends a location query request including the terminal identifier to the NEF network element. After receiving the location query request, the NEF network element invokes a network function such as an AMF network element of a core network to obtain location information. The AMF network element sends the queried location information of the terminal to an invoker, that is, the NEF network element. The NEF network element sends a second message to the first network element. The second message includes the location information of the terminal.

The sending unit 710 is configured to send an MEC application instance discovery response message to the terminal. The MEC application instance discovery response message includes information about the determined first at least one MEC application instance.

It may be understood that the foregoing units may also be referred to as modules, circuits, or the like, and the foregoing units may be independently disposed, or may be completely or partially integrated.

In some possible implementations, the sending unit 710 and the receiving unit 720 may alternatively be implemented by using a transceiver unit, or the sending unit 710 and the receiving unit 720 may be collectively referred to as a transceiver unit and may be implemented by using a communication interface. The processing unit 730 may be implemented by using a processor.

Optionally, the communication apparatus 700 may further include a storage unit. The storage unit is configured to store data or an instruction (which may also be referred to as code or a program). The foregoing units may interact with or be coupled to the storage unit, to implement a corresponding method or function. For example, the processing unit may read the data or the instruction in the storage unit, so that the communication apparatus implements the method in the foregoing embodiment.

FIG. 8 is a schematic diagram of a communication apparatus according to an embodiment of this application. The apparatus is configured to implement steps performed by the corresponding control plane function network element or the terminal apparatus in the foregoing method embodiments. As shown in FIG. 8, the apparatus 800 includes a sending unit 810 and a receiving unit 820, and optionally further includes a processing unit 830. The sending unit 810 may be configured to perform a step related to sending of information, a message, a request, or the like by the corresponding control plane function network element or the terminal apparatus in the foregoing method embodiments. The receiving unit 820 may be configured to perform a step related to receiving of information, a message, a response, or the like by the corresponding control plane function network element or the terminal apparatus in the foregoing method embodiments. Optionally, the processing unit 830 is configured to process related information or a message.

An embodiment of this application further provides a communication system. The communication system may include the first network element and the control plane function network element in the foregoing method embodiments, and may further include an edge node on which the MEC application instance is installed, or may further include a terminal apparatus.

When an integrated unit is used, FIG. 8A is a possible schematic diagram of a structure of a communication apparatus (denoted as a communication apparatus 80A) in the foregoing embodiments. The communication apparatus 80A includes a processing unit 801A and a communication unit 802A, and may further include a storage unit 803A. The schematic diagram of a structure shown in FIG. 8A may be used to show a structure of the first network element or the SMF network element in the foregoing embodiments.

When the schematic diagram of a structure shown in FIG. 8A is used to show a structure of the first network element in the foregoing embodiment, in an implementation,
the communication unit 802A is configured to obtain information about first at least one EDN from an SMF network element or a source EES, where the first at least one EDN is determined based on location information of a terminal;
the processing unit 801A is configured to determine first at least one MEC application instance in the first at least one EDN; and
the communication unit 802A is further configured to send address information of the first at least one MEC application instance to the terminal or the source EES.

Optionally, the communication unit 802A is specifically configured to: send a third message to the SMF network element or the source EES, where the third message is used to request at least one EDN that includes an MEC application instance requested by the terminal; and receive a response message of the third message from the SMF network element or the source EES, where the response message includes the information about the first at least one EDN.

Optionally, the third message includes information about a candidate EDN, where the candidate EDN is determined by the first network element based on the location information of the terminal and information about an EDN stored in the first network element.

Optionally, the third message includes the location information of the terminal.

Optionally, information about the first at least one EDN includes a DNAI of the first at least one EDN.

Optionally, the DNAI of the first at least one EDN includes a DNAI of an EES in the first at least one EDN and/or a DNAI of an MEC application instance in the first at least one EDN.

Optionally, the communication unit 802A is further configured to send address information of an EES associated with the first at least one MEC application instance to the terminal or the source EES.

Optionally, the information about the first at least one EDN is used to indicate communication performance of a communication path between the terminal and the first at least one EDN.

Optionally, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

Optionally, the communication unit 802A is further configured to send priority information of the first at least one MEC application instance to the terminal or the source EES.

In another implementation,
the communication unit 802A is configured to obtain information about first at least one EDN from an SMF network element or a source EES, where the first at least one EDN is determined based on location information of a terminal;
the processing unit 801A is configured to determine first at least one EES in the first at least one EDN; and
the communication unit 802A is further configured to send address information of the first at least one EES to the terminal or the source EES.

Optionally, the communication unit 802A is specifically configured to: send a third message to the SMF network element or the source EES, where the third message is used to request at least one EDN that includes an EES requested by the terminal; and receive a response message of the third message from the SMF network element or the source EES, where the response message includes the information about the first at least one EDN.

Optionally, the third message includes information about a candidate EDN, where the candidate EDN is determined by the first network element based on the location information of the terminal and information about an EDN stored in the first network element.

Optionally, the third message includes the location information of the terminal.

Optionally, information about the first at least one EDN includes a DNAI of the first at least one EDN.

Optionally, the DNAI of the first at least one EDN includes a DNAI of an EES in the first at least one EDN and/or a DNAI of a multi-access edge computing (MEC) application instance in the first at least one EDN.

Optionally, the information about the first at least one EDN is used to indicate communication performance of a communication path between the terminal and the first at least one EDN.

Optionally, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

Optionally, the communication unit 802A is further configured to send priority information of the first at least one EES to the terminal or the source EES.

When the schematic diagram of a structure shown in FIG. 8A is used to show a structure of the SMF network element in the foregoing embodiment,
the processing unit 801A is configured to receive a third message from the first network element by using the communication unit 802A, where the third message is used to request at least one EDN that includes an MEC application instance requested by the terminal or an EES requested by the terminal; and
the processing unit 801A is further configured to send, by using the communication unit 802A, a response message of the third message to the first network element based on the third message, where the response message includes information about first at least one EDN.

When the at least one EDN includes the MEC application instance requested by the terminal, the first at least one EDN includes an EDN that includes the MEC application instance requested by the terminal. When the at least one EDN includes the EES requested by the terminal, the first at least one EDN includes an EDN that includes the EES requested by the terminal.

Optionally, the first at least one EDN is determined based on location information of the terminal and information about second at least one EDN obtained by the SMF network element.

Optionally, the first at least one EDN is determined based on the location information of the terminal and information about a candidate EDN, and the information about the candidate EDN is carried in the third message.

Optionally, the location information of the terminal is carried in the third message.

Optionally, information about the first at least one EDN includes a DNAI of the first at least one EDN.

Optionally, the DNAI of the first at least one EDN includes a DNAI of an EES in the first at least one EDN and/or a DNAI of an MEC application instance in the first at least one EDN.

Optionally, the information about the first at least one EDN is used to indicate communication performance of a communication path between the terminal and the first at least one EDN.

Optionally, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

The communication unit may also be referred to as a transceiver unit. An antenna and a control circuit that are in the communication apparatus 80A and that have receiving and sending functions may be considered as the communication unit 802A in the communication apparatus 80A, and a processor that has a processing function may be considered as the processing unit 801A in the communication apparatus 80A. Optionally, a component configured to implement a receiving function in the communication unit 802A may be considered as a receiving unit. The receiving unit is configured to perform receiving steps in embodiments of this application. The receiving unit may be a receiver machine, a receiver, a receiver circuit, or the like. A component configured to implement a sending function in the communication unit 802A may be considered as a sending unit. The sending unit is configured to perform sending steps in embodiments of this application. The sending unit may be a transmitter machine, a transmitter, a transmitter circuit, or the like.

When an integrated unit is used, FIG. 8B is a possible schematic diagram of a structure of a communication apparatus (denoted as a communication apparatus 80B) in the foregoing embodiments. The communication apparatus 80B includes a processing unit 801B and a communication unit 802B, and may further include a storage unit 803B. The schematic diagram of a structure shown in FIG. 8B may be used to show a structure of the first network element, the second network element, or the second SMF network element in the foregoing embodiments.

When the schematic diagram of a structure shown in FIG. 8B is used to show a structure of the first network element in the foregoing embodiment,
the communication unit 802B is configured to obtain information about first at least one EDN from a second network element, where the first at least one EDN is determined based on at least one of location information of a terminal or service information of the terminal, and the second network element is a first session management network element, an NEF network element, or a source EES;
the processing unit 801B is configured to determine first at least one EES based on the information about the first at least one EDN; and
the communication unit 802B is further configured to send address information of the first at least one EES to the terminal or the source EES.

Optionally, the communication unit 802B is specifically configured to:
send a third message to the second network element, where the third message includes at least one of information used to determine a location of the terminal or the service information of the terminal; and
receive the information about the first at least one EDN from the second network element, where the first at least one EDN matches at least one of the location information of the terminal or the service information of the terminal.

Optionally, the information about the first at least one EDN includes at least one DNAI of the first at least one EDN.

Optionally, the DNAI of the first at least one EDN includes a DNAI of an EES in the first at least one EDN and/or a DNAI of an MEC application instance in the first at least one EDN.

Optionally, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

Optionally, the communication unit 802B is further configured to send priority information of the first at least one EES to the terminal or the source EES.

When the schematic diagram of a structure shown in FIG. 8B is used to show a structure of the second network element in the foregoing embodiment,
the processing unit 801B is configured to receive a third message from a first network element by using the communication unit 802B, where the third message includes at least one of information used to determine a location of the terminal or service information of the terminal, and the second network element is a first session management network element, an NEF, or a source EES; and
the processing unit 801B is further configured to send information about first at least one EDN to the first network element based on the third message by using the communication unit 802B, where the first at least one EDN matches at least one of the location information of the terminal or the service information of the terminal.

Optionally, the processing unit 801B is specifically configured to:
determine a second session management network element based on the location information of the terminal;
send a request message to the second session management network element by using the communication unit 802B, where the request message includes at least one of location information or service information, the location information includes the location information of the terminal, and the service information includes the service information of the terminal;
receive the information about the first at least one EDN from the second session management network element by using the communication unit 802B; and
send the information about the first at least one EDN to the first network element by using the communication unit 802B.

Optionally, the second network element is the NEF network element, and the processing unit 801B is specifically configured to:
determine the information about the first at least one EDN based on the location information of the terminal and a first correspondence, where the first correspondence includes a correspondence between location area information and information about an EDN; or
determine the information about the first at least one EDN based on the service information of the terminal and a second correspondence, where the second correspondence includes a correspondence between the service information and information about an EDN; or
determine the information about the first at least one EDN based on the location information and the service information of the terminal, and a third correspondence, where the third correspondence includes a correspondence among location area information, information about an EDN, and the service information; and
send the information about the first at least one EDN to the first network element by using the communication unit 802B.

Optionally, the information about the first at least one EDN includes at least one DNAI of the first at least one EDN.

Optionally, the DNAI of the first at least one EDN includes a DNAI of an EES in the first at least one EDN and/or a DNAI of a multi-access edge computing (MEC) application instance in the first at least one EDN.

Optionally, the information about the first at least one EDN further includes at least one of the following information: a quantity of user plane network elements between the terminal and the first at least one EDN, an internal mobile network communication latency between the terminal and the first at least one EDN, an end-to-end communication latency between the terminal and the first at least one EDN, an internal mobile network communication bandwidth between the terminal and the first at least one EDN, and priority information of the communication path between the terminal and the first at least one EDN.

When the schematic diagram of a structure shown in FIG. 8B is used to show a structure of the second SMF network element in the foregoing embodiment,
the communication unit 802B is configured to receive a request message from a second network element, where the request message includes at least one of location information and service information, the location information includes location information of a terminal, the service information includes service information of the terminal, and the second network element is a first session management network element, an NEF network element, or a source EES.

When the request message includes the location information, the processing unit 801B is configured to determine information about first at least one EDN based on the location information and a first correspondence. The first correspondence includes a correspondence between location area information and information about an EDN.

Alternatively, when the request message includes the service information, the processing unit 801B is configured to determine information about first at least one EDN based on the service information and a second correspondence. The second correspondence includes a correspondence between the service information and information about an EDN.

Alternatively, when the request message includes the location information and the service information, the processing unit 801B is configured to determine information about first at least one EDN based on the location information, the service information, and a third correspondence. The third correspondence includes a correspondence among location area information, information about an EDN, and the service information.

The communication unit 802B is further configured to send the information about the first at least one EDN to the second network element.

The communication unit may also be referred to as a transceiver unit. An antenna and a control circuit that are in the communication apparatus 80B and that have receiving and sending functions may be considered as the communication unit 802B in the communication apparatus 80B, and a processor that has a processing function may be considered as the processing unit 801B in the communication apparatus 80B. Optionally, a component configured to implement a receiving function in the communication unit 802B may be considered as a receiving unit. The receiving unit is configured to perform receiving steps in embodiments of this application. The receiving unit may be a receiver machine, a receiver, a receiver circuit, or the like. A component configured to implement a sending function in the communication unit 802B may be considered as a sending unit. The sending unit is configured to perform sending steps in embodiments of this application. The sending unit may be a transmitter machine, a transmitter, a transmitter circuit, or the like.

It should be understood that division of units in the foregoing apparatus is merely logical function division. During actual implementation, all or some of the units may be integrated into one physical entity, or may be physically separated. In addition, all the units in the apparatus may be implemented by using software invoked by a processing element, or may be implemented by using hardware; or some units may be implemented by using software invoked by a processing element, and some units may be implemented by using hardware. For example, each unit may be a separately disposed processing element, or may be integrated into a chip of the apparatus for implementation. In addition, each unit may be stored in a memory in a form of a program, and a processing element of the apparatus invokes and executes a function of the unit. In addition, all or some of the units may be integrated together, or may be implemented independently. The processing element herein may also be a processor, and may be an integrated circuit having a signal processing capability. In an implementation process, the steps in the foregoing methods or the foregoing units may be implemented by using an integrated logic circuit of hardware in the processor element, or may be implemented by using software invoked by a processing element.

In an example, the unit in any one of the foregoing apparatuses may be one or more integrated circuits configured to implement the foregoing method, for example, one or more application-specific integrated circuits (Application-Specific Integrated Circuit, ASIC), or one or more microprocessors (digital signal processor, DSP), or one or more field programmable gate arrays (Field Programmable Gate Array, FPGA), or a combination of at least two of these integrated circuit forms. For another example, when the unit in the apparatus may be implemented in a form of a program invoked by a processing element, the processing element may be a general-purpose processor, for example, a central processing unit (Central Processing Unit, CPU) or another processor that can invoke the program. For another example, these units may be integrated together and implemented in a form of a system-on-a-chip (system-on-a-chip, SOC).

The foregoing unit for receiving (for example, the receiving unit) is an interface circuit of the apparatus, and is configured to receive a signal from another apparatus. For example, when the apparatus is implemented by using a chip, the receiving unit is an interface circuit of the chip configured to receive a signal from another chip or apparatus. The foregoing unit for sending (for example, the sending unit) is an interface circuit of the apparatus, and is configured to send a signal to another apparatus. For example, when the apparatus is implemented by using a chip, the sending unit is an interface circuit of the chip configured to send a signal to another chip or apparatus.

FIG. 9 is a schematic diagram of a structure of a communication apparatus (for example, the communication apparatus may be a terminal, a first network element, an SMF network element, a second network element, or a second SMF network element) according to an embodiment of this application. The communication apparatus is configured to implement operations of the communication apparatus in the foregoing embodiments. As shown in FIG. 9, the communication apparatus includes a processor 910 and an interface 930, and optionally further includes a memory 920. The interface 930 is configured to communicate with another device.

The method performed by the communication apparatus in the foregoing embodiment may be implemented by the processor 910 by invoking a program stored in a memory (which may be the memory 920 in the communication apparatus, or may be an external memory). To be specific, the apparatus used for the communication apparatus may include the processor 910. The processor 910 invokes the program in the memory, to perform the method performed by the communication apparatus in the foregoing method embodiment. The processor herein may be an integrated circuit having a signal processing capability, for example, a CPU. The apparatus used for the communication apparatus may be implemented by using one or more integrated circuits configured to implement the foregoing methods, for example, one or more ASICs, one or more microprocessors DSPs, one or more FPGAs, or a combination of at least two of these integrated circuit forms. Alternatively, the foregoing implementations may be combined.

All or some of the foregoing embodiments may be implemented by using software, hardware, firmware, or any combination thereof. When software is used to implement embodiments, all or some of the embodiments may be implemented by using a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Various illustrative logic units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

In one or more example designs, the functions described in this application may be implemented by using hardware, software, firmware, or any combination thereof. If the functions are implemented by using software, the functions may be stored in a computer-readable medium, or are transmitted to the computer-readable medium in a form of one or more instructions or code. The computer-readable medium includes a computer storage medium and a communication medium that enables a computer program to transfer from one place to another place. The storage medium may be an available medium that can be accessed by any general-purpose or special computer. For example, such computer-readable medium may include but is not limited to a RAM, a ROM, an EEPROM, a CD-ROM, or another optical disc storage, disk storage, or another magnetic storage apparatus, or any other medium that may be used to carry or store program code in a form of an instruction or a data structure and in another form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, or a digital subscriber line (DSL), or in a wireless manner such as infrared, radio, or microwave, the software is also included in the defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data by a magnetic means, and the disk usually copies data optically by a laser means. The foregoing combination may also be included in the computer-readable medium.

A person of ordinary skill in the art may understand that various numerals such as "first" and "second" in this application are merely used for differentiation for ease of description, and are not used to limit the scope of embodiments of this application or represent a sequence. "And/or" describes an association relationship between associated objects and indicates that three relationships may exist. For example, A and/or B may indicate the following three cases: Only A exists, both A and B exist, and only B exists. The character "/" generally indicates an "or" relationship between the associated objects. "At least one" means one or more. At least two means two or more. "At least one", "any one", or a similar expression means any combination of these items, including a single item (piece) or any combination of a plurality of items (pieces). For example, at least one item (piece, or type) of a, b, or c may indicate: a, b, c, a and b, a and c, b and c, or a, b, and c, where a, b, and c may be singular or plural. "A plurality of' means two or more, and another quantifier is similar to this.

A person of skill in the art should be aware that in one or more of the foregoing examples, the functions described in this application may be implemented by using hardware, software, firmware, or any combination thereof. When the functions are implemented by software, the foregoing functions may be stored in a computer-readable medium or transmitted as one or more instructions or code in the computer-readable medium. The computer-readable medium includes a computer storage medium and a communication medium. The communication medium includes any medium that enables a computer program to be transmitted from one place to another. The storage medium may be any available medium accessible to a general-purpose or dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application. According to the foregoing descriptions of this specification in this application, any content of technologies in the art that can be used or can be used to implement this application and any modification based on the disclosed content shall be considered clear in the art. The basic principles described in this application may be applied to other variations without departing from the essence and scope of this application. Therefore, the content disclosed in this application is not limited to the described embodiments and designs, but may also be extended to a maximum scope that is consistent with the principles and disclosed new features of this application.

Although this application is described with reference to specific features and embodiments thereof, it is clearly that various modifications and combinations may be made to them without departing from the scope of this application. Correspondingly, the specification and accompanying drawings are merely example descriptions of this application defined by the appended claims, and are considered as any of and all modifications, variations, combinations or equivalents that cover the scope of this application. It is clearly that a person skilled in the art can make various modifications and variations to this application without departing from the scope of this application. This application is intended to cover these modifications and variations of this application provided that they fall within the scope of the claims of this application and their equivalent technologies.

## Claims

1. A method for determining an application instance, comprising:
obtaining, by a first network element, location information of a terminal;
determining, by the first network element, first at least one multi-access edge computing (MEC) application instance based on the location information of the terminal; and
sending, by the first network element, address information of the first at least one MEC application instance to the terminal.

2. The method according to claim 1, wherein the obtaining, by a first network element, location information of a terminal comprises:
receiving, by the first network element, a first message sent by the terminal, wherein the first message comprises the location information of the terminal; or
receiving, by the first network element, a second message sent by a core network control plane function network element, wherein the second message comprises the location information of the terminal.

3. The method according to claim 1 or 2, wherein the first network element stores address information of second at least one MEC application instance and location information of the second at least one MEC application instance, and the determining, by the first network element, first at least one MEC application instance based on the location information of the terminal comprises:
determining, by the first network element, the first at least one MEC application instance from the second at least one MEC application instance based on the location information of the terminal and the location information of the second at least one MEC application instance.

4. A method for determining an application instance, comprising:
sending, by a control plane function network element, first notification information to a first network element, wherein the first notification information is used to notify the first network element that a user plane path of a terminal changes;
obtaining, by the first network element, location information of the terminal;
determining, by the first network element, first at least one multi-access edge computing (MEC) application instance based on the location information of the terminal; and
sending, by the first network element, address information of the first at least one MEC application instance to the terminal.

5. The method according to claim 4, wherein the obtaining, by the first network element, location information of the terminal comprises:
receiving, by the first network element, the first notification information, wherein the first notification information comprises the location information of the terminal, and the location information of the terminal is location information of a target user plane function (UPF) network element.

6. The method according to claim 4 or 5, wherein the method further comprises:
receiving, by the first network element, an MEC application instance change subscription request message sent by the terminal.

7. The method according to any one of claims 4 to 6, wherein the first network element stores address information of second at least one MEC application instance and location information of the second at least one MEC application instance, and the determining, by the first network element, first at least one MEC application instance based on the location information of the terminal comprises:
determining, by the first network element, the first at least one MEC application instance from the second at least one MEC application instance based on the location information of the terminal and the location information of the second at least one MEC application instance.

8. A communication system, comprising a control plane function network element and a first network element, wherein
the control plane function network element is configured to send first notification information to the first network element, wherein the first notification information is used to notify the first network element that a user plane path of a terminal changes;
the first network element is configured to: obtain location information of the terminal, and determine first at least one multi-access edge computing (MEC) application instance based on the location information of the terminal; and
the first network element is further configured to send address information of the first at least one MEC application instance to the terminal.

9. The system according to claim 8, wherein
the first network element is specifically configured to receive the first notification information, wherein the first notification information comprises the location information of the terminal, and the location information of the terminal is location information of a target user plane function (UPF) network element.

10. The system according to claim 8 or 9, wherein
the first network element is further configured to receive an MEC application instance change subscription request message sent by the terminal.

11. The system according to any one of claims 8 to 10, wherein the first network element stores address information of second at least one MEC application instance and location information of the second at least one MEC application instance; and
the first network element is specifically configured to determine the first at least one MEC application instance from the second at least one MEC application instance based on the location information of the terminal and the location information of the second at least one MEC application instance.

12. A method for determining an application instance, comprising:
obtaining, by a first network element, information about first at least one edge data network (EDN) from a session management network element or a source edge enabler server (EES), wherein the first at least one EDN is determined based on location information of a terminal;
determining, by the first network element, first at least one multi-access edge computing (MEC) application instance in the first at least one EDN; and
sending, by the first network element, address information of the first at least one MEC application instance to the terminal or the source EES.

13. The method according to claim 12, wherein the obtaining, by a first network element, information about first at least one EDN from a session management network element or a source EES comprises:
sending, by the first network element, a third message to the session management network element or the source EES, wherein the third message is used to request at least one EDN that comprises an MEC application instance requested by the terminal; and
receiving, by the first network element, the information about the first at least one EDN from the session management network element or the source EES.

14. The method according to claim 12 or 13, wherein the information about the first at least one EDN comprises a data network application identifier (DNAI) of the first at least one EDN.

15. The method according to claim 14, wherein the DNAI of the first at least one EDN comprises a DNAI of an EES in the first at least one EDN and/or a DNAI of an MEC application instance in the first at least one EDN.

16. The method according to any one of claims 12 to 15, wherein the method further comprises:
sending, by the first network element to the terminal or the source EES, address information of an EES associated with the first at least one MEC application instance, wherein the EES associated with the first at least one MEC application instance is comprised in the first at least one EDN.

17. The method according to any one of claims 12 to 16, wherein the method further comprises:
sending, by the first network element, priority information of the first at least one MEC application instance to the terminal or the source EES.

18. A method for determining an edge enabler server (EES), comprising:
obtaining, by a first network element, information about first at least one edge data network (EDN) from a session management network element or a source EES, wherein the first at least one EDN is determined based on location information of a terminal;
determining, by the first network element, first at least one EES in the first at least one EDN; and
sending, by the first network element, address information of the first at least one EES to the terminal or the source EES.

19. The method according to claim 18, wherein the obtaining, by a first network element, information about first at least one EDN from a session management network element or a source EES comprises:
sending, by the first network element, a third message to the session management network element or the source EES, wherein the third message is used to request at least one EDN that comprises an EES requested by the terminal; and
receiving, by the first network element, the information about the first at least one EDN from the session management network element or the source EES.

20. The method according to claim 18 or 19, wherein the information about the first at least one EDN comprises a data network application identifier (DNAI) of the first at least one EDN.

21. The method according to claim 20, wherein the DNAI of the first at least one EDN comprises a DNAI of an EES in the first at least one EDN and/or a DNAI of a multi-access edge computing (MEC) application instance in the first at least one EDN.

22. The method according to any one of claims 18 to 21, wherein the method further comprises:
sending, by the first network element, priority information of the first at least one EES to the terminal or the source EES.

23. A communication method, comprising:
receiving, by a session management network element, a third message from a first network element, wherein the third message is used to request at least one edge data network (EDN)that comprises a multi-access edge computing (MEC) application instance requested by a terminal or an edge enabler server (EES) requested by the terminal; and
sending, by the session management network element, information about first at least one EDN to the first network element based on the third message, wherein
when the first at least one EDN comprises the MEC application instance requested by the terminal, the first at least one EDN comprises an EDN that comprises the MEC application instance requested by the terminal; or when the first at least one EDN comprises the EES requested by the terminal, the first at least one EDN comprises an EDN that comprises the EES requested by the terminal.

24. The method according to claim 23, wherein the first at least one EDN is determined based on location information of the terminal and information about second at least one EDN obtained by the session management network element.

25. The method according to claim 23 or 24, wherein the information about the first at least one EDN comprises a data network application identifier (DNAI) of the first at least one EDN.

26. The method according to claim 25, wherein the DNAI of the first at least one EDN comprises a DNAI of the EES in the first at least one EDN and/or a DNAI of the MEC application instance in the first at least one EDN.

27. A method for determining an edge enabler server (EES), comprising:
obtaining, by a first network element, information about first at least one edge data network (EDN) from a second network element, wherein the first at least one EDN is determined based on at least one of location information of a terminal or service information of the terminal, and the second network element is a first session management network element, a network exposure function (NEF) network element, or a source EES;
determining, by the first network element, first at least one EES based on the information about the first at least one EDN; and
sending, by the first network element, address information of the first at least one EES to the terminal or the source EES.

28. The method according to claim 27, wherein the obtaining, by a first network element, information about first at least one EDN from a second network element comprises:
sending, by the first network element, a third message to the second network element, wherein the third message comprises at least one of information used to determine a location of the terminal or the service information of the terminal; and
receiving, by the first network element, the information about the first at least one EDN from the second network element, wherein the first at least one EDN matches at least one of the location information of the terminal or the service information of the terminal.

29. The method according to claim 27 or 28, wherein the information about the first at least one EDN comprises at least one data network application identifier (DNAI) of the first at least one EDN.

30. The method according to claim 29, wherein the DNAI of the first at least one EDN comprises a DNAI of an EES in the first at least one EDN and/or a DNAI of an MEC application instance in the first at least one EDN.

31. The method according to any one of claims 27 to 30, wherein the method further comprises:
sending, by the first network element, priority information of the first at least one EES to the terminal or the source EES.

32. A communication method, comprising:
receiving, by a second network element, a third message from a first network element, wherein the third message comprises at least one of information used to determine a location of a terminal or service information of the terminal, and the second network element is a first session management network element, a network exposure function (NEF) network element, or a source edge enabler server (EES); and
sending, by the second network element, information about first at least one edge data network (EDN) to the first network element based on the third message, wherein the first at least one EDN matches at least one of location information of the terminal or the service information of the terminal.

33. The method according to claim 32, wherein the sending, by the second network element, information about first at least one EDN to the first network element based on the third message comprises:
determining, by the second network element, a second session management network element based on the location information of the terminal;
sending, by the second network element, a request message to the second session management network element, wherein the request message comprises at least one of location information or service information, the location information comprises the location information of the terminal, and the service information comprises the service information of the terminal;
receiving, by the second network element, the information about the first at least one EDN from the second session management network element; and
sending, by the second network element, the information about the first at least one EDN to the first network element.

34. The method according to claim 32, wherein the second network element is the NEF network element, and the sending, by the second network element, information about first at least one EDN to the first network element based on the third message comprises:
determining, by the second network element, the information about the first at least one EDN based on the location information of the terminal and a first correspondence, wherein the first correspondence comprises a correspondence between location area information and information about an EDN; or
determining, by the second network element, the information about the first at least one EDN based on the service information of the terminal and a second correspondence, wherein the second correspondence comprises a correspondence between service information and information about an EDN; or
determining, by the second network element, the information about the first at least one EDN based on the location information of the terminal, the service information of the terminal, and a third correspondence, wherein the third correspondence comprises a correspondence among location area information, information about an EDN, and service information; and
sending, by the second network element, the information about the first at least one EDN to the first network element.

35. The method according to any one of claims 32 to 34, wherein the information about the first at least one EDN comprises at least one data network application identifier (DNAI) of the first at least one EDN.

36. The method according to claim 35, wherein the DNAI of the first at least one EDN comprises a DNAI of an EES in the first at least one EDN and/or a DNAI of a multi-access edge computing (MEC) application instance in the first at least one EDN.

37. A communication apparatus, comprising: a function unit configured to perform the method according to any one of claims 1 to 3, or a function unit configured to perform the method according to any one of claims 4 to 7, or a function unit configured to perform the method according to any one of claims 12 to 17, or a function unit configured to perform the method according to any one of claims 18 to 22, or a function unit configured to perform the method according to any one of claims 23 to 26, or a function unit configured to perform the method according to any one of claims 27 to 31, or a function unit configured to perform the method according to any one of claims 32 to 36, wherein
an action performed by the function unit is implemented by hardware or implemented by hardware executing corresponding software.

38. A communication apparatus, comprising a processor, wherein
the processor is connected to a memory, the memory is configured to store computer-executable instructions, and the processor executes the computer-executable instructions stored in the memory, so that the communication apparatus implements the method according to any one of claims 1 to 3, or implements the method according to any one of claims 4 to 7, or implements the method according to any one of claims 12 to 17, or implements the method according to any one of claims 18 to 22, or implements the method according to any one of claims 23 to 26, or implements the method according to any one of claims 27 to 31, or implements the method according to any one of claims 32 to 36.

39. A computer-readable storage medium, comprising instructions, wherein when the instructions are run on a computer, the computer is enabled to perform the method according to any one of claims 1 to 3, or perform the method according to any one of claims 4 to 7, or perform the method according to any one of claims 12 to 17, or perform the method according to any one of claims 18 to 22, or perform the method according to any one of claims 23 to 26, or perform the method according to any one of claims 27 to 31, or perform the method according to any one of claims 32 to 36.

40. A computer program product comprising instructions, wherein when the instructions are run on a computer, the computer is enabled to perform the method according to any one of claims 1 to 3, or perform the method according to any one of claims 4 to 7, or perform the method according to any one of claims 12 to 17, or perform the method according to any one of claims 18 to 22, or perform the method according to any one of claims 23 to 26, or perform the method according to any one of claims 27 to 31, or perform the method according to any one of claims 32 to 36.
